# EUROPÄISCHE PATENTSCHRIFT

(11) **EP 4 367 622 B1**
(45) Veröffentlichungstag und Bekanntmachung des Hinweises auf die Patenterteilung: **17.12.2025**
(21) Anmeldenummer: 22747631.4
(22) Anmeldetag: 05.07.2022
(51) Int. Cl.: G06Q 30/0601, G06Q 10/0631, G06Q 10/0833, H04W 4/60, H04W 4/70, H04W 4/80

(54) **VERFAHREN ZUR KOMMUNIKATION ZWISCHEN EINEM CLIENT-GERÄT UND EINEM SERVERSYSTEM; SYSTEM ZUR KOMMUNIKATION ZWISCHEN EINEM CLIENT-GERÄT UND EINEM SERVERSYSTEM; CLIENT-GERÄT; SERVERSYSTEM; COMPUTERPROGRAMM**
METHOD FOR COMMUNICATING BETWEEN A CLIENT DEVICE AND A SERVER SYSTEM; SYSTEM FOR COMMUNICATING BETWEEN A CLIENT DEVICE AND A SERVER SYSTEM; CLIENT DEVICE; SERVER SYSTEM; COMPUTER PROGRAM
PROCÉDÉ DE COMMUNICATION ENTRE UN APPAREIL CLIENT ET UN SYSTÈME SERVEUR, SYSTÈME DE COMMUNICATION ENTRE UN APPAREIL CLIENT ET UN SYSTÈME SERVEUR, APPAREIL CLIENT, SYSTÈME SERVEUR, PROGRAMME INFORMATIQUE

(30) Priorität: 05.07.2021 EP 21183798
(43) Veröffentlichungstag der Anmeldung: 15.05.2024
(73) Patentinhaber: IOX GmbH, 40221 Düsseldorf (DE)
(72) Erfinder: JÄNISCH, Robert, 50769 Köln (DE); BELL, Andreas, 50859 Köln (DE)
(74) Vertreter: Kutzenberger Wolff & Partner
(86) Internationale Anmeldenummer: PCT/EP2022/068620
(87) Internationale Veröffentlichungsnummer: WO 2023/280875

(56) Entgegenhaltungen:
- US-A1- 2020 169 859
- AMAZON: "user's guide 4th edition Contents", 11 September 2012 (2012-09-11), XP055871563, Retrieved from the Internet <URL:https://kindle.s3.amazonaws.com/Kindle_Users_Guide_5th_Edition.pdf> [retrieved on 20211210]
- ANONYMOUS: "Amazon Dash - Wikipedia", 10 May 2021 (2021-05-10), XP055871571, Retrieved from the Internet <URL:https://en.wikipedia.org/w/index.php?title=Amazon_Dash&oldid=1022420353> [retrieved on 20211210]

## Beschreibung

Die Erfindung betrifft ein Verfahren zur Kommunikation zwischen einem Client-Gerät und einem Serversystem, insbesondere einem Cloud-System. Ferner betrifft die Erfindung ein System zur Kommunikation zwischen einem Client-Gerät und einem Serversystem, insbesondere einem Cloud-System, wobei das System das Serversystem und das Client-Gerät umfasst. Des Weiteren betrifft die Erfindung ein Client-Gerät. Ferner betrifft die Erfindung ein Serversystem. Zusätzlich betrifft die Erfindung ein Computerprogramm.

Im Zuge des Internet der Dinge (Internet of Things, loT) gewinnt die Verwendung von energetisch sparsamen Endgeräten in einer Vielzahl von Anwendungen zunehmend an Bedeutung. Solche Geräte können beispielsweise Sensoren oder Detektionsvorrichtungen umfassen, mit denen kosteneffizient der Status oder die Betriebsbedingungen von Maschinen und Vorrichtungen erfasst werden können. Durch Übermittlung der so erfassten Daten an zentrale Systeme, kann beispielsweise eine effiziente Zustandsüberwachung erreicht werden. Solche Konzepte finden in unterschiedlichen Industrien und Umgebungen Anwendung. Beispielsweise kommen loT-Geräte zunehmend in industriellen Produktionsketten oder der Logistik zum Einsatz. Neben der Energieeffizienz ist dabei die Flexibilität von loT-Lösungen und deren Nutzerfreundlichkeit von entscheidender Bedeutung, da die Konzepte häufig individuell an spezifische Anwendungen und Anforderungen angepasst werden müssen. Die "Internet-of-Things"-Umgebung von US 2020/169859 A1 zeigt beispielhaft, wie Clients mit einem elektronischen Papierdisplay sich mit einem Cloud-Server verbinden.

Vor diesem Hintergrund stellt sich die Aufgabe, ein Verfahren und System zur Kommunikation zwischen einem Client-Gerät und einem Serversystem zur Verfügung zu stellen, die eine hohe Flexibilität und/oder eine vorteilhafte Energieeffizienz ermöglichen. Ferner stellt sich die Aufgabe, ein entsprechendes Client-Gerät, Serversystem und Computerprogram zur Verfügung zu stellen.

Zur Lösung der Aufgabe wird ein Verfahren zur Kommunikation zwischen einem Client-Gerät und einem Serversystem, insbesondere einem Cloud-System, vorgeschlagen,
wobei das Client-Gerät eine Anzeigeeinrichtung, aufweisend ein elektronisches Papier, umfasst,
wobei das Verfahren zumindest die folgenden Schritte umfasst:
   -- in einem ersten Schritt wird eine Triggerinformation von dem Client-Gerät erhalten oder mithilfe des Client-Geräts erzeugt,
   -- in einem zweiten Schritt, nach dem ersten Schritt, wird in Abhängigkeit der Triggerinformation eine Triggernachricht von dem Client-Gerät an das Serversystem übermittelt,
   -- in einem dritten Schritt, nach dem zweiten Schritt, wird mithilfe des Serversystems und in Abhängigkeit der erhaltenen Triggernachricht ein erster Workflow ausgeführt,
   -- in einem vierten Schritt, während und/oder nach dem dritten Schritt, wird mindestens eine Anzeigeinformation, insbesondere betreffend den ersten Workflow, von dem Serversystem an das Client-Gerät übermittelt,
wobei die mindestens eine Anzeigeinformation mithilfe des elektronischen Papiers der Anzeigeeinrichtung des Client-Geräts angezeigt wird.

Mithilfe der vorliegenden Erfindung kann eine besonders energieeffiziente Verwendung eines Client-Geräts in Kommunikation mit einem Serversystem erfolgen. Das Client-Gerät umfasst ein elektronisches Papier, mit dessen Hilfe Anzeigeinformationen angezeigt werden können. Die auf dem elektronischen Papier dargestellten Anzeigeinformationen umfassen vorzugsweise Text. Alternativ oder zusätzlich können die Anzeigeinformationen Graphiken umfassen. Durch die Verwendung eines elektronischen Papiers ist der Energieverbrauch des Client-Geräts besonders gering. Gleichzeitig ist erfindungsgemäß eine besonders flexible Anpassung des Verfahrens an individuelle technische Anwendungen möglich, da die Anzeigeinformation, die mithilfe des elektronischen Papiers des Client-Geräts angezeigt wird, von einem Serversystem, beispielsweise einem Backend und/oder Cloud-System, erhalten wird. Das Client-Gerät kann daher besonders kosteneffizient und energieeffizient ausgebildet werden. Bevorzugt umfasst das Client-Gerät außer dem elektronischen Papier keine weiteren Anzeigeeinrichtungen, insbesondere keine aktiven, selbstleuchtenden Anzeigeeinrichtungen.

Mithilfe der vorliegenden Erfindung ist in besonders vorteilhafter Weise eine bidirektionale Kommunikation zwischen dem Client-Gerät und dem Serversystem möglich, Das Client-Gerät ist in der Lage, eine Triggernachricht an das Serversystem zu übermitteln. Die Triggernachricht und/oder in der Triggernachricht enthaltene Informationen können einem Workflow, insbesondere einem Prozessablauf und/oder Arbeitsablauf, zugeordnet sein, der von dem Serversystem, insbesondere computerimplementiert, ausgeführt wird. Während und/oder nach der Ausführung dieses Workflows übermittelt das Serversystem mindestens eine Anzeigeinformation an das Client-Gerät, wobei die Anzeigeinformation zur Anzeige mithilfe des elektronischen Papiers der Anzeigeeinrichtung vorgesehen ist. Somit kann eine zentrale Konfiguration und/oder Auswahl und/oder Einstellung der Anzeigeinformation, die auf dem Client-Gerät angezeigt werden soll, von Seiten des Serversystems erfolgen. Dies bietet eine besonders vorteilhafte Flexibilität, da die Anzeigeinformation in vorteilhafterweise serverseitig, beispielsweise durch einen Nutzer, konfigurierbar und/oder einstellbar und/oder wählbar ist. Beispielsweise kann eine dem ersten Workflow zugeordnete Anzeigeinformation zentral, im Serversystem geändert werden und so automatisch für eine Mehrzahl von Client-Geräten angepasst werden, die dem ersten Workflow zugeordnet sind. Somit ist eine besonders flexible Einstellung und Konfiguration von Client-Geräten mit einem elektronischen Papier möglich, die zu einer bidirektionalen Kommunikation mit einem Serversystem eingerichtet sind.

Erfindungsgemäß kann eine besonders flexible Einstellbarkeit und Anwendbarkeit von derartigen Client-Geräten in einer Vielzahl von Anwendungen realisiert werden, beispielsweise in der Logistik, der Produktion, der Überwachung von industriellen Abläufen, oder dem Einzelhandel.

Das erfindungsgemäße Serversystem ist bevorzugt ein Cloud-System.

Bevorzugt weist das Client-Gerät einen Energiespeicher, beispielsweise eine Batterie, und/oder eine Energy-Harvesting-Einrichtung auf. Hierdurch kann eine besonders flexible kabellose Anwendung des Client-Geräts erfolgen. Besonders vorteilhaft ist hierbei der geringe Energiebedarf des Client-Geräts, der durch die Verwendung eines elektronischen Papiers und die Übermittlung der Anzeigeinformation von Seiten des Serversystems erreichbar ist. Für einen Energiespeicher des Client-Geräts kann hierdurch eine besonders lange Lebenszeit erreicht werden. Ferner ist es dadurch möglich, dass eine Energy-Harvesting-Einrichtung für den gesamten Energiebedarf des Client-Geräts ausreichen kann. Alternativ oder zusätzlich ist es jedoch auch denkbar, dass eine Energieversorgung, insbesondere eine Spannungs- und/oder Stromversorgung, des Client-Geräts mithilfe einer Kabelverbindung ausgebildet ist.

Erfindungsgemäß ist unter dem "ersten Workflow" insbesondere ein bestimmter Workflow zu verstehen, der in Abhängigkeit der Triggernachricht ausgeführt wird. Die Bezeichnung "erste" bezieht sich dabei bevorzugt nicht auf eine zeitliche Abfolge oder Reihenfolge.

Gemäß einer bevorzugten Ausführungsform der vorliegenden Erfindung ist das elektronische Papier der Anzeigeeinrichtung des Client-Geräts derart eingerichtet, dass es Licht wie herkömmliches Papier reflektiert. Gemäß einer bevorzugten Ausführungsform der vorliegenden Erfindung ist das elektronische Papier der Anzeigeeinrichtung des Client-Geräts derart eingerichtet, dass die Anzeigeeinrichtung eine passive, insbesondere nichtleuchtende, Anzeigeeinrichtung ist. Vorzugsweise können mithilfe des elektronischen Papiers Texte und/oder Bilder dauerhaft angezeigt werden, ohne dass dafür eine Erhaltungsspannung erforderlich ist. Es ist gemäß einer besonders bevorzugten Ausgestaltung möglich, dass das elektronische Papier biegsam ist. Alternativ ist ein nichtbiegsamen elektronisches Papier denkbar. Das elektronische Papier kann zweifarbig, insbesondere schwarz/weiß, oder mehrfarbig ausgebildet sein.

Vorteilhafte Ausgestaltungen und Weiterbildungen der Erfindung sind den Unteransprüchen sowie der Beschreibung unter Bezugnahme auf die Zeichnungen entnehmbar.

Gemäß einer vorteilhaften Ausgestaltung der Erfindung ist es vorgesehen, dass das Serversystem Zugriff auf eine Datenbank hat, wobei in der Datenbank eine Zuordnung:
-- zwischen der Triggernachricht und dem ersten Workflow und/oder
-- zwischen der Triggerinformation und dem ersten Workflow und/oder
-- zwischen einer Identifikationsinformation des Client-Geräts und dem ersten Workflow hinterlegt ist,

vorzugsweise wobei für den Fall, dass in der Datenbank eine Zuordnung zwischen der Triggerinformation und dem ersten Workflow hinterlegt ist, die im zweiten Schritt übermittelte Triggernachricht die Triggerinformation umfasst, und/oder
vorzugsweise wobei für den Fall, dass in der Datenbank eine Zuordnung zwischen der Identifikationsinformation des Client-Geräts und dem ersten Workflow hinterlegt ist, die im zweiten Schritt übermittelte Triggernachricht die Identifikationsinformation des Client-Geräts umfasst.

Es ist vorzugsweise denkbar, dass die Datenbank Teil des Serversystems ist. Es ist alternativ denkbar, dass das Serversystem in Kommunikationsverbindung mit der Datenbank steht und auf die Datenbank zugreifen kann.

Die Triggernachricht ist vorzugsweise charakteristisch für die Triggerinformation. Der erste Workflow ist der Triggernachricht zugeordnet. Es ist beispielsweise denkbar, dass mehrere Workflows vorhanden sind, wobei der erste Workflow im dritten Schritt aus den mehreren Workflows ausgewählt wird, insbesondere mithilfe der Zuordnung zwischen der Triggernachricht und dem ersten Workflow. Es ist denkbar, dass einigen oder allen der mehreren Workflows jeweils mindestens eine Triggernachricht und/oder Triggerinformation zugeordnet ist, sodass in Abhängigkeit der erhaltenen Triggernachricht ein spezifischer Workflow, beispielsweise der erste Workflow, der mehreren Workflows ausgewählt wird.

Es ist vorzugsweise denkbar, dass die Triggernachricht die Triggerinformation und/oder die Identifikationsinformation des Client-Geräts aufweist. Besonders bevorzugt weist die Triggernachricht sowohl die Triggerinformation als auch die Identifikationsinformation auf, wobei eine Zuordnung zu dem ersten Workflow besonders bevorzugt über die Kombination aus Identifikationsinformation und Triggerinformation erfolgt.

Besonders bevorzugt ist es möglich, dass die Datenbank eine Zuordnung zwischen Client-Geräten, insbesondere deren Identifikationsinformationen, und Nutzern umfasst. Beispielsweise ist es denkbar, dass eine Gruppe von Client-Geräten, umfassend zumindest das Client-Gerät, einem ersten Nutzer zugeordnet ist und eine weitere Gruppe von Client-Geräten, umfassend ein oder mehrere weitere Client-Geräte, einem zweiten Nutzer zugeordnet ist. Vorzugsweise kann der erste Nutzer über einen Zugriff auf das Serversystem den oder die Workflows für die ihm zugeordnete Gruppe von Client-Geräten konfigurieren und/oder auswählen und/oder festlegen. Vorzugsweise kann der zweite Nutzer über einen Zugriff auf das Serversystem den oder die Workflows für die ihm zugeordnete weitere Gruppe von Client-Geräten konfigurieren und/oder auswählen und/oder festlegen. Besonders bevorzugt sind für einen Nutzer bei einem Zugriff auf das Serversystem dabei lediglich die ihm zugeordneten Client-Geräte sichtbar. Der Zugriff auf das Serversystem durch die Nutzer kann beispielswiese über eine Programmierschnittstelle erfolgen.

Gemäß einer vorteilhaften Ausgestaltung der Erfindung ist es vorgesehen, dass - im dritten Schritt - der erste Workflow für die Triggernachricht mithilfe der in der Datenbank hinterlegten Zuordnung ausgewählt wird, insbesondere aus einer Mehrzahl von Workflows.

Es ist insbesondere denkbar, dass das Serversystem für die erhaltene Triggernachricht mithilfe der in der Datenbank hinterlegten Zuordnung den zugehörigen ersten Workflow aus einer Mehrzahl von Workflows auswählt. Es ist möglich, dass die Triggernachricht die Triggerinformation umfasst, wobei in dem Serversystem eine Zuordnung zwischen der Triggernachricht und dem ersten Workflow hinterlegt ist, wobei das Serversystem für die erhaltene Triggernachricht mithilfe der Triggerinformation den zugehörigen ersten Workflow aus einer Mehrzahl von Workflows auswählt. Es ist alternativ oder zusätzlich denkbar, dass die Triggernachricht eine Identifikationsinformation des Client-Geräts umfasst, wobei in dem Serversystem eine Zuordnung zwischen der Identifikationsinformation und dem ersten Workflow hinterlegt ist, wobei das Serversystem für die erhaltene Triggernachricht mithilfe der Identifikationsinformation den zugehörigen ersten Workflow aus einer Mehrzahl von Workflows auswählt. Es ist besonders bevorzugt denkbar, dass die Datenbankeinrichtung eine Zuordnung zwischen einerseits der Identifikationsinformation und der Triggerinformation und andererseits dem ersten Workflow umfasst, sodass der erste Workflow sowohl in Abhängigkeit der Identifikationsinformation als auch in Abhängigkeit der Triggerinformation ausgewählt wird.

Gemäß einer vorteilhaften Ausgestaltung der Erfindung ist es vorgesehen, dass die Ausführung des ersten Workflows im dritten Schritt umfasst, dass eine externe Nachricht von dem Serversystem an eine externe Einrichtung übermittelt wird,
vorzugsweise wobei
-- mithilfe der externen Nachricht eine Bestellung von mindestens einem Gegenstand und/oder mindestens einer Dienstleistung beauftragt wird, und/oder
-- mithilfe der externen Nachricht die externe Einrichtung über die Triggerinformation informiert wird, und/oder
-- mithilfe der externen Nachricht ein Datensatz an die externe Einrichtung übermittelt wird, wobei der Datensatz dem ersten Workflow zugeordnet ist oder bei der Ausführung des ersten Workflows erzeugt wird. Es ist hierbei beispielsweise möglich, dass mithilfe der Triggerinformation und/oder in Abhängigkeit der Triggerinformation eine Bestellung eines oder mehrerer Gegenstände und/oder Dienstleistungen initiiert wird. Als Teil des ersten Workflows wird eine diesbezügliche externe Nachricht mithilfe des Serversystems an eine externe Einrichtung übermittelt. Es ist alternativ oder zusätzlich möglich, dass ein Datensatz an eine externe Einrichtung übermittelt wird, der Datensatz kann beispielswiese Messinformationen umfassen, die mithilfe einer dem Client-Gerät zugeordneten Sensoreinrichtung ermittelt wurden und die mithilfe der Triggernachricht an das Serversystem übermittelt wurden. Dies kann beispielsweise besonders vorteilhaft zur Überwachung einer Maschinenfunktion oder eines Maschinenzustands einer Maschine sein, der das Client-Gerät und/oder die Sensoreinrichtung zugeordnet ist.

Gemäß einer Ausführungsform der vorliegenden Erfindung ist es besonders bevorzugt denkbar, dass eine Kommunikation zwischen dem Serversystem und dem Client-Gerät, insbesondere zumindest im zweiten Schritt und im vierten Schritt, mithilfe eines loT-Protokolls (Internet-of-Things-Protokoll) erfolgt. Besonders bevorzugt ist das Client-Gerät derart eingerichtet, dass es zur Kommunikation mit dem Serversystem mit einem Mobilfunknetz verbunden ist, besonders bevorzugt ohne einen zwischengeschalteten Router oder ein Gateway. Hierdurch ist das Client-Gerät besonders flexibel einsetzbar und kann komfortabel durch einen Nutzer in Betrieb genommen werden.

Bevorzugt erfolgt die gesamte Kommunikation zwischen dem Client-Gerät und dem Serversystem mithilfe des loT-Protokolls und besonders bevorzugt ohne ein gesondertes lokales Gateway (in der Umgebung des Client-Geräts). Gemäß einer Ausführungsform der vorliegenden Erfindung sind als loT-Protokolle insbesondere HTTP, MQTT, MQTTSN, CoAP und/oder XMPP denkbar. Besonders bevorzugt sind dabei leichtgewichtige loT-Protokolle wie MQTT, MQTTSN, CoAP und/oder XMPP.

Vorzugsweise ist die Kommunikation, besonders bevorzugt die gesamte Kommunikation, zwischen dem Client-Gerät und dem Serversystem mithilfe einer Low Power Wide Area (LPWA)-Technologie ausgebildet, insbesondere mithilfe von Narrowband-IoT. Somit kann eine Verbindung mit einem geringen Datenoverhead und einem niedrigen Energiebedarf bereitgestellt werden. Gleichzeitig ist mithilfe von Narrowband-IoT auf besonders kosteneffiziente Weise eine vorteilhafte Gebäudedurchdringung und Reichweite möglich. Alternativ oder zusätzlich sind beispielsweise LTE-M, insbesondere LTE Cat-M1, und/oder EC-GSM-IoT und/oder weitere 5G-kompatible Kommunikationstechnologien zur Kommunikation zwischen dem Client-Gerät und dem Serversystem denkbar.

Gemäß einer vorteilhaften Ausgestaltung der Erfindung ist es vorgesehen, dass das Serversystem eine Programmierschnittstelle, insbesondere ein API, application programming interface, aufweist, wobei mithilfe der Programmierschnittstelle, insbesondere durch einen Nutzer:
- der erste Workflow und/oder die Mehrzahl von Workflows, und/oder
- mindestens eine dem ersten Workflow zugeordnete Eigenschaft, insbesondere ein vorgesehener Empfänger der externen Nachricht und/oder ein Inhalt der externen Nachricht, und/oder
- die Zuordnung zwischen der Triggernachricht und dem ersten Workflow, und/oder
- die Zuordnung zwischen der Triggerinformation und dem ersten Workflow, und/oder
- die Zuordnung zwischen einer Identifikationsinformation des Client-Geräts und dem ersten Workflow, und/oder
- die Identifikationsinformation des Client-Geräts,
einstellbar und/oder änderbar ist. Hierdurch kann das Client-Gerät besonders schnell und effizient einem bestimmten Workflow, beispielsweise dem ersten Workflow zugeordnet werden, und somit effizient in funktionelle Abläufe eingebunden werden, ohne dass eine umständliche lokale Einstellung oder Konfiguration des Client-Geräts erfolgen muss. Entsprechend können weitere Client-Geräte des Nutzers durch den Nutzer mithilfe der Programmierschnittstelle eingestellt und/oder zugeordnet werden. Mithilfe der Programmierschnittstelle kann ein Nutzer somit auf vorteilhafte Weise ihm zugeordnete Client-Geräte bestimmten Workflows zuordnen und/oder die Workflows konfigurieren. Somit können Client-Geräte besonders flexibel und nutzerfreundlich in unterschiedliche Arbeitsabläufe integriert werden und effizient und schnell für verschiedenste Anwendungen eingerichtet werden.

Die Identifikationsinformation kann in einem Speicher des Client-Geräts, beispielsweise in einer embedded SIM (eSIM), hinterlegt sein. Bei der Identifikationsinformation kann es sich beispielsweise um eine IMEI oder eine IMSI handeln. Auch andere Typen von Identifikationsinformationen sind denkbar. Beispielsweise ist es denkbar, dass eigene Identifikationsinformationen für alle dem Serversystem zugeordneten und/oder in der Datenbank registrierten Client-Geräte vergeben werden. Es ist beispielsweise auch denkbar, dass die Identifikationsinformation in einem Modem hinterlegt ist und/oder dass die Identifikationsinformation eine MAC-Adresse umfasst.

Gemäß einer vorteilhaften Ausgestaltung der Erfindung ist es vorgesehen, dass in einem Konfigurationsschritt, bevorzugt vor dem ersten Schritt, das Serversystem mindestens eine Konfigurationsinformation an das Client-Gerät übermittelt, wobei die mindestens eine Konfigurationsinformation insbesondere eine oder mehrere der folgenden Informationen umfasst:
-- eine Firmware für das Client-Gerät,
-- mindestens eine Information zur Konfiguration des Client-Geräts derart, dass das Client-Gerät zur Erkennung und/oder Erfassung und/oder Erzeugung der Triggerinformation eingerichtet ist,
-- mindestens eine Information zur Konfiguration des Client-Geräts derart, dass das Client-Gerät zur Erzeugung der Triggernachricht in Abhängigkeit der Triggerinformation eingerichtet ist. Hierdurch wird eine besonders vorteilhafte und vorzugsweise automatisierte Einrichtung des Client-Geräts für seine spezifische Anwendung möglich. Das ein elektronisches Papier aufweisende Client-Gerät kann, insbesondere nach einem Kauf des Client-Geräts durch einen Nutzer, nutzerfreundlich und kosteneffizient für seine spezifische Anwendung eingerichtet werden, ohne dass hierfür eine umständliche lokale und manuelle Konfiguration des Client-Geräts durchgeführt werden muss. Insbesondere ist es denkbar, dass die für eine Anwendung des Client-Geräts benötigte Firmware und/oder eine Version einer Firmware serverseitig auf das Client-Gerät aufgespielt wird.

Es ist denkbar, dass die mindestens eine Konfigurationsinformation durch einen Nutzer, insbesondere mithilfe der Programmierschnittstelle, ausgewählt und/oder eingestellt wird, und bevorzugt derart dem Serversystem bereitgestellt wird. Es ist denkbar, dass die mindestens eine Konfigurationsinformation in Abhängigkeit einer Einstellung des ersten Workflows und/oder einer Auswahl des ersten Workflows und/oder einer Änderung des ersten Workflows für das Client-Gerät durch einen Nutzer, insbesondere über die Programmierschnittstelle, ermittelt wird.

Gemäß einer vorteilhaften Ausgestaltung der Erfindung ist es vorgesehen, dass das Client-Gerät eine Eingabeeinrichtung umfasst, wobei die Triggerinformation im ersten Schritt durch eine Betätigung der Eingabeeinrichtung erzeugt wird, wobei bevorzugt die Eingabeeinrichtung mindestens einen Druckknopf oder ein Touchpad umfasst. Alternativ oder zusätzlich zu einem Druckknopf oder Touchpad sind beispielsweise ein Sensor zur Erkennung eines Fingerabdrucks und/oder eine zur Gesichtserkennung konfigurierte Kameraeinrichtung und/oder ein Lidar (light detection and ranging)-Sensor denkbar. Durch einen Sensor zur Erkennung eines Fingerabdrucks und/oder eine zur Gesichtserkennung (Facerecognition) konfigurierte Kameraeinrichtung kann dabei eine Sicherheitsauthentifizierung eingerichtet werden. Durch die Sicherheitsauthentifizierung kann erreicht werden, dass die Triggernachricht nur bei einer Betätigung der Eingabeeinrichtung durch einen autorisierten Nutzer übermittelt wird und/oder der erste Workflow nur bei einer Betätigung der Eingabeeinrichtung durch einen autorisierten Nutzer ausgeführt wird. Die Betätigung der Eingabeeinrichtung erfolgt beispielsweise durch einen Nutzer. Durch eine Betätigung der Eingabeeinrichtung ist es beispielsweise denkbar, dass der Nutzer eine Bestellung mindestens eines Gegenstands und/oder mindestens einer Dienstleistung beauftragt oder anfordert und/oder dass eine Zahlung bestätigt wird oder eine Zahlungsbestätigung angefordert wird (Smart Contracts). Die Triggerinformation ist vorzugsweise spezifisch für die Betätigung der Eingabeeinrichtung oder spezifisch für die Eingabeeinrichtung. Die Triggernachricht wird in Abhängigkeit der Triggerinformation erzeugt und/oder an das Serversystem übermittelt, wobei bevorzugt die Triggernachricht somit ebenfalls spezifisch für die Betätigung der Eingabeeinrichtung und/oder spezifisch für die Eingabeeinrichtung ist. Als Teil des ersten Workflows wird dann beispielsweise eine externe Nachricht an die externe Einrichtung übermittelt, wobei mithilfe der externen Nachricht die Bestellung des mindestens einen Gegenstands und/oder der mindestens einen Dienstleistung beauftragt oder angefordert wird. Die externe Nachricht umfasst somit vorzugsweise eine Information zur Bestellung des mindestens einen Gegenstands und/oder der mindestens einen Dienstleistung. Es ist besonders bevorzugt denkbar, dass die Triggerinformation abhängig von einer Art der Betätigung der Eingabeeinrichtung ist. Beispielsweise ist es für den Fall, dass die Eingabeeinrichtung einen Druckknopf umfasst, denkbar, dass die Triggerinformation von einer zeitlichen Dauer einer Betätigung des Druckknopfes und/oder von einer Anzahl an aufeinanderfolgenden Betätigungen des Druckknopfes ist. Beispielsweise ist es denkbar, dass ein einmaliges Drücken des Druckknopfes eine andere Triggerinformation erzeugt als ein doppeltes Drücken des Druckknopfes und somit letztendlich einen anderen Workflow anstößt. Beispielsweise kann ein kürzeres Drücken des Druckknopfes eine andere Triggerinformation erzeugen als ein im Vergleich dazu längeres Drücken des Druckknopfes und somit letztendlich einen anderen Workflow anstoßen.

Gemäß einer vorteilhaften Ausgestaltung der Erfindung ist es vorgesehen, dass das Client-Gerät eine Sensoreinrichtung umfasst oder mit einer Sensoreinrichtung in Kommunikationsverbindung steht, wobei die Triggerinformation im ersten Schritt in Abhängigkeit einer Messung der Sensoreinrichtung erzeugt wird. Es ist besonders bevorzugt denkbar, dass mithilfe einer Messung der Sensoreinrichtung eine Unterschreitung oder Überschreitung eines Schwellenwerts einer Messgröße der Sensoreinrichtung detektiert wird, wobei die Triggerinformation in Abhängigkeit dieser Detektion der Unterschreitung oder Überschreitung des Schwellenwerts erzeugt wird. Beispielsweise detektiert die Sensoreinrichtung, dass ein Stauraum, insbesondere in einem Lager oder einem Geschäft, geleert wurde, wobei in dem Stauraum ein Gegenstand oder mehrere Gegenstände gelagert wurden, und es wird automatisch eine Triggerinformation zur Nachbestellung des Gegenstands oder der Gegenstände erzeugt. Die externe Nachricht an die externe Einrichtung umfasst in diesem Fall vorzugsweise eine Information zur Nachbestellung des Gegenstands oder der Gegenstände. Alternativ oder zusätzlich ist es denkbar, dass die Triggernachricht einen oder mehrere Messwerte umfasst, die mithilfe der Sensoreinrichtung ermittelt wurden. Der oder die Messwerte können beispielsweise Teil eines Datensatzes sein, der als Teil des ersten Workflows von dem Serversystem an eine externe Einrichtung übermittelt wird.

Bevorzugt ist die Sensoreinrichtung als Temperatursensor oder Feuchtigkeitssensor, insbesondere Luftfeuchtigkeitssensor, oder Gassensor, insbesondere CO2-Gassensor oder CO-Gassensor ausgebildet. Mit einer derartigen Sensoreinrichtung kann das Client-Gerät zur Überwachung der Luftqualität eines Raums eingesetzt werden. Beispielsweise kann die Triggerinformation im ersten Schritt erzeugt werden, wenn die Messung der Feuchtigkeit, insbesondere Luftfeuchtigkeit, einen vorgegebenen Schwellenwert überschreitet. Eine solches Vorgehen ermöglicht es, dass das Serversystem im dritten Schritt einen Workflow ausführt, mit welchem eine Anzeigeinformation bereitgestellt wird, die einen Hinweis zum Verbessern der Luftqualität enthält, beispielsweise eine Aufforderung zum Lüften bzw. Öffnen eines Fensters. Diese Anzeigeinformation kann dann in mithilfe des elektronischen Papiers angezeigt werden. Alternativ kann die Triggerinformation im ersten Schritt erzeugt werden, wenn die Messung der Temperatur einen Schwellenwert unter- oder überschreitet oder die Messung des Gassensors, insbesondere des CO2-Gassensors oder CO-Gassensors, einen Schwellenwert unter- oder überschreitet.

Bevorzugt ist die Sensoreinrichtung als Wärmemengenzähler ausgebildet. Die Triggerinformation kann dann bei Überschreiten einer vorgegebenen Messung der Wärmemenge erzeugt werden. Auf diese Weise kann der Heizenergieverbrauch in einem Raum bzw. einer Wohnung erfasst werden. Das Serversystem kann im dritten Schritt einen Workflow ausführen, mit welchem eine Anzeigeinformation bereitgestellt wird, die die verbrauchte Wärmemenge und/oder die entstandenen Heizkosten angibt.

Bevorzugt ist die Sensoreinrichtung als Positionssensor ausgebildet. Eine derartige Ausgestaltung ermöglicht es, Informationen auf dem elektronischen Papier des Client - Geräts anzuzeigen, die abhängig von der Position des Client-Geräts sind. Der Positionssensor kann beispielsweise als Sensor bzw. Empfänger eines globalen Navigationssatellitensystems (GNSS) ausgebildet sein.

Gemäß einer vorteilhaften Ausgestaltung der Erfindung ist es vorgesehen, dass das Client-Gerät eine Aufwacheinheit aufweist, welche das Client-Gerät bei Empfang einer Aufwachnachricht aus einem Energiesparzustand in einen Betriebszustand versetzt und die Triggerinformation im ersten Schritt durch die Aufwachnachricht bzw. den Übergang des Client-Geräts aus dem Energiesparzustand in den Betriebszustand erzeugt wird. Die Aufwachnachricht kann ausgehend von dem Serversystem an das Client-Gerät gesendet werden.

Gemäß einer vorteilhaften Ausgestaltung der Erfindung ist es vorgesehen, dass die im dritten Schritt übermittelte Anzeigeinformation:
- mindestens eine dem ersten Workflow zugeordnete Eigenschaft, und/oder
- die Übermittlung der externen Nachricht, insbesondere eine Information dazu, ob eine Übermittlung der externen Nachricht erfolgt ist und/oder ob mithilfe der externen Nachricht eine Bestellung aufgebeben wurde, und/oder
- eine Rückmeldung der externen Einrichtung als Antwort auf die externe Nachricht, insbesondere eine Rückmeldung der externen Einrichtung betreffend einen Bestellstatus einer mithilfe der externen Nachricht aufgegebenen Bestellung,
betrifft. Bei der mindestens einen dem ersten Workflow zugeordneten Eigenschaft kann es sich vorzugsweise um eine oder mehrere der folgenden Eigenschaften handeln:
-- eine Bestellmenge und/oder eine Stückzahl eines zu bestellenden Gegenstands und/oder einer zu bestellenden Dienstleistung,
-- technische Informationen und/oder Spezifikationen bezüglich eines zu bestellenden Gegenstands und/oder einer zu bestellenden Dienstleistung,
-- Service Informationen,
-- eine Ausprägung und/oder einen Typ eines zu bestellenden Gegenstands und/oder einen Umfang einer zu bestellenden Dienstleistung. Es ist denkbar, dass die Rückmeldung der externen Einrichtung als Antwort auf die externe Nachricht ein voraussichtliches Lieferdatum des bestellten Gegenstands und/oder der bestellten Dienstleistung betrifft. Alternativ oder zusätzlich ist es denkbar, dass die Rückmeldung der externen Einrichtung als Antwort auf die externe Nachricht eine Fehlermeldung betrifft, insbesondere eine Fehlermeldung dazu, dass eine Bestellung nicht erfolgreich ausgeführt werden konnte. Alternativ oder zusätzlich ist es denkbar, dass die Rückmeldung der externen Einrichtung als Antwort auf die externe Nachricht eine Angabe zu einer Funktion oder einem Status einer Maschine umfasst. Derartige Anzeigeinformationen können somit an das Client-Gerät übermittelt werden und mithilfe des Client-Geräts angezeigt werden. Somit kann eine energieeffiziente und individuelle Rückmeldung und Informationsübermittlung an einen Nutzer des Client-Geräts erfolgen. Beispielsweise kann der Nutzer auf Fehler oder Probleme hingewiesen werden. Somit wird der Nutzer auf vorteilhafte Weise in die Lage versetzt, Gegenmaßnahmen bei einem Problem oder Fehler einzuleiten oder technische Abläufe und Prozesse unter Berücksichtigung der Anzeigeinformation anzupassen.

Gemäß einer vorteilhaften Ausgestaltung der Erfindung ist es vorgesehen, dass mindestens eine Konfigurationsinformation für die Anzeigeeinrichtung des Client-Geräts betreffend:
-- eine örtliche Aufteilung des elektronischen Papiers in Teilabschnitte, und/oder
-- eine Zuordnung von Teilabschnitten des elektronischen Papiers zu bestimmten Anzeigeinformationen und/oder zu Typen von Anzeigeinformationen,
von dem Serversystem an das Client-Gerät übermittelt wird, bevorzugt vor dem vierten Schritt oder gemeinsam mit der Anzeigeinformation im vierten Schritt. Hierdurch kann eine besonders vorteilhafte Einrichtung der Anzeigeeinrichtung und somit des elektronischen Papiers erfolgen. Beispielsweise kann das elektronische Papier durch eine Konfigurationsinformation aus dem Serversystem heraus in verschiedene Teilabschnitte, insbesondere zwei oder mehr Abschnitte, eingeteilt werden, denen verschiedene Anzeigeinformationen oder Typen von Anzeigeinformationen zugeordnet werden. Es ergibt sich hierdurch eine besonders hohe Flexibilität, die besonders nutzerfreundlich implementierbar ist. Beispielsweise ist es denkbar, dass das elektronische Papier derart in Teilabschnitte eingeteilt wird, dass separate Teilabschnitte für Textinformationen und Grafiken eingerichtet werden und/oder separate Teilabschnitte für Fehlermeldungen, einen Bestellstatus und/oder technische Informationen zu einem Gegenstand. Mithilfe der Konfigurationsinformation betreffend die örtliche Aufteilung des elektronischen Papiers in Teilabschnitte kann gemäß einer Ausführungsform der vorliegenden Erfindung insbesondere die Anzahl der Teilabschnitte, die jeweilige Größe der Teilabschnitte und/oder die örtliche Anordnung der Teilabschnitte zueinander angepasst und/oder konfiguriert werden. Hierdurch ist eine besonders flexible und gleichzeitig energieeffiziente Implementierung für ein Client-Gerät mit einem elektronischen Papier möglich. Beispielsweise ist es denkbar, dass die Anzeigeeinrichtung mithilfe der Konfigurationsinformation derart konfiguriert wird, dass ein erster Teilabschnitt von mehreren Teilabschnitten des elektronischen Papiers der mindestens einen Anzeigeinformation zugeordnet wird, die im vierten Schritt übermittelt wird. Andere Teilabschnitte des elektronischen Papiers brauchen in diesem Fall zur Darstellung der Anzeigeinformation nicht geändert werden, sodass eine besonders vorteilhafte Energieeffizienz und ein hoher Nutzerkomfort erreicht werden. Hierdurch wird ferner verhindert, dass das gesamte elektronische Papier zur Anzeige der Anzeigeinformation vollständig geupdated wird und dabei potentiell flackert. Insbesondere wird vorzugsweise ausschließlich der der Anzeigeinformation zugeordnete Teilabschnitt des elektronischen Papiers derart geupdated, dass die Anzeigeinformation angezeigt wird, während die anderen Teilabschnitte des elektronischen Papiers nicht geändert werden. Ein weiterer Vorteil ist es dabei, dass die Updategeschwindigkeit besonders hoch ist, insbesondere im Vergleich zu einem Update des gesamten elektronischen Papiers.

Gemäß einer vorteilhaften Ausgestaltung der Erfindung ist vorgesehen, dass ausschließlich der einem bestimmten Typ von Anzeigeinformation zugeordnete Teilabschnitt des elektronischen Papiers zur Darstellung einer vom Client-Gerät erhaltenen Anzeigeinformationen dieses Typs erneuert bzw. geupdated wird. Hierdurch kann eine vorteilhaft erhöhe Energieeffizienz ermöglicht und ein unerwünschtes Flackern der Anzeige verhindert werden.

Gemäß einer vorteilhaften Ausgestaltung der Erfindung ist es vorgesehen, dass die Typen von Anzeigeinformationen einen, mehrere oder alle der folgenden Typen umfassen:
-- Preisinformationen, insbesondere betreffend einen Gegenstand und/oder eine Dienstleistung,
-- Informationen zu technischen Eigenschaften eines Gegenstands und/oder einer Dienstleistung,
-- Informationen zu einer Stückzahl eines Gegenstands,
-- Informationen zu einem Namen oder einer Bezeichnung eines Gegenstands und/oder einer Dienstleistung,
-- Informationen zu einem Lieferdatum eines Gegenstands und/oder einem Durchführungsdatum einer Dienstleistung,
-- Fehlermeldungen und/oder Warnungen,
-- Statusinformationen, insbesondere betreffend einen Satus und/oder eine Funktion einer Maschine,
-- Kommissionierinformationen, insbesondere Pick-by-Light-Informationen und/oder Put-to-Light-Informationen,
-- Sensorinformationen,
-- Graphiken. Einzelne Teilabschnitte des elektronischen Papiers können somit jeweils einem oder mehreren der vorhergehenden Typen von Anzeigeinformationen zugeordnet werden. Insbesondere in dem Fall, dass die im vierten Schritt übermittelte mindestens eine Anzeigeinformation einen oder mehrere der Typen von Anzeigeinformationen betrifft, müssen lediglich der Teilabschnitt oder die Teilabschnitte des elektronischen Papiers zur Darstellung dieser Anzeigeinformation erneuert bzw. geupdated werden, die diesen Typen von Anzeigeinformationen zugeordnet sind. Hierdurch kann eine besonders vorteilhafte Energieeffizienz erreicht werden.

Gemäß einer vorteilhaften Ausgestaltung der Erfindung ist es vorgesehen, dass das Client-Gerät einen lokalen Speicher umfasst, in dem die mindestens eine Konfigurationsinformation für die Anzeigeeinrichtung des Client-Geräts hinterlegt ist.

Gemäß einer vorteilhaften Ausgestaltung der Erfindung ist es vorgesehen, dass die Konfigurationsinformation für die Anzeigeeinrichtung des Client-Geräts vor der Übermittlung an das Client-Gerät mithilfe der Programmierschnittstelle des Serversystems, insbesondere durch einen Nutzer, eingestellt und/oder ausgewählt wird. Hierdurch kann eine besonders hohe Flexibilität erreicht werden. Ferner ist es möglich, dass eine Vielzahl von Client-Geräten gleichzeitig konfiguriert werden können, indem der Vielzahl von Client-Geräten jeweils die eingestellte und/oder ausgewählte Konfigurationsinformation für die Anzeigeeinrichtung übermittelt wird.

Gemäß einer vorteilhaften Ausgestaltung der Erfindung ist es vorgesehen, dass mindestens eine weitere Konfigurationsinformation für die Anzeigeeinrichtung des Client-Geräts betreffend:
-- eine oder mehrere Schriftgrößen, insbesondere zumindest zur Darstellung der Anzeigeinformation, und/oder
-- eine oder mehrere Schriftarten (Fonts), insbesondere zumindest zur Darstellung der Anzeigeinformation, und/oder
-- Formatierungsinformationen
von dem Serversystem an das Client-Gerät übermittelt wird, bevorzugt vor dem vierten Schritt oder gemeinsam mit der Anzeigeinformation im vierten Schritt. Es ist besonders bevorzugt denkbar, dass die mindestens eine weitere Konfigurationsinformation von dem Serversystem an das Client-Gerät übermittelt wird und in einem Speicher des Client-Geräts hinterlegt wird, bevorzugt vor dem vierten Schritt oder vor dem ersten Schritt. Es ist insbesondere denkbar, dass mehrere Schriftarten und Schriftgrößen in dem Speicher des Client-Geräts hinterlegt werden. Hierdurch wird es besonders vorteilhaft möglich, dass die an das Client-Gerät übermittelten Anzeigeinformationen, beispielsweise im vierten Schritt, besonders geringe Datenmengen umfassen können, insbesondere weil die Schriftgröße und Schriftart der darzustellenden Anzeigeinformation nicht jeweils mitgesendet werden muss. Es ist dabei beispielsweise möglich, dass die Anzeigeinformation ausschließlich zeichenkodierte Textinformationen, beispielsweise mithilfe von ASCII, und/oder Binärcode umfasst. Die Schriftart und/oder Schriftgröße und/oder Formatierungsinformationen zur Darstellung der Textinformationen auf dem elektronischen Papier ist hingegen vorzugsweise in dem Speicher des Client-Geräts hinterlegt und muss nicht jedes Mal bei der Übermittlung einer Anzeigeinformation mitgesendet werden. Hierdurch kann die übermittelte Datenmenge und der Energieverbrauch weiter verringert werden, insbesondere wenn über die Lebenszeit des Client-Geräts vielfach Anzeigeinformationen von dem Serversystem an das Client-Gerät übermittelt werden. Gemäß einer Ausführungsform der vorliegenden Erfindung sind Textinformationen auch als Schriftzeicheninformationen zu verstehen. Es ist beispielsweise denkbar, dass die Textinformationen Buchstaben, Ziffern und/oder Sonderzeichen umfassen. Die Formatierungsinformationen können insbesondere:
- eine Schriftformatierung, bevorzugt schmal, kursiv, durchgestrichen und/oder fett, und/oder
- einen Zeilenabstand,
- eine Zentrierung, insbesondere oben, unten, links oder rechts,
- eine Listendarstellung
- ein Einrücken,
- eine Buchstabenanordnung, beispielsweise um einen Winkel, insbesondere 90° oder 180°, gedreht,
- eine Darstellung von Formen, insbesondere Linien, Vierecken oder Kreisen, vorzugsweise, ob die Formen gefüllt oder leer dargestellt werden,
betreffen und/oder umfassen.

Alternativ oder zusätzlich zur Übermittlung der mindestens einen weiteren Konfigurationsinformation von dem Serversystem zu dem Client-Gerät ist es beispielsweise denkbar, dass die eine oder mehreren Schriftgrößen und/oder die eine oder mehreren Schriftarten bereits vor der Inbetriebnahme des Client-Geräts in dem Speicher des Client-Geräts hinterlegt werden, beispielsweise bei einer Herstellung des Client-Geräts.

Es ist gemäß einer bevorzugten Ausführungsform der vorliegenden Erfindung denkbar, dass die Anzeigeinformation mithilfe des elektronischen Papiers der Anzeigeeinrichtung des Client-Geräts angezeigt wird bis:
-- das Client-Gerät eine weitere Anzeigeinformation von dem Serversystem erhält, die zur Überschreibung und/oder zum Update der mindestens eine Anzeigeinformation vorgesehen ist, und/oder
-- ein Timer abgelaufen ist, wobei die mithilfe des elektronischen Papiers dargestellte mindestens eine Anzeigeinformation nach Ablauf des Timers vorzugsweise von dem elektronischen gelöscht wird oder durch eine, vorzugsweise im Speicher des Client-Geräts hinterlegte, Standardanzeigeinformation ersetzt wird. Gemäß einer bevorzugten Ausführungsform ist es denkbar, dass der Timer in einem Speicher des Client-Geräts hinterlegt ist und/oder von dem Serversystem an das Client-Gerät übermittelt wird. Mithilfe eines im Speicher hinterlegten Timers ist es beispielsweise möglich, dass die auf dem elektronischen Papier oder zumindest auf einem Teilabschnitt des elektronischen Papiers dargestellten Anzeigeinformationen in regelmäßigen oder unregelmäßigen Zeitabständen gelöscht und/oder durch eine Standardanzeigeinformation ersetzt werden, besonders bevorzugt ohne dass hierfür jeweils eine Nachricht von dem Serversystem and das Client-Gerät übermittelt werden muss. Hierdurch kann für eine Vielzahl von Anwendungsfällen eine besonders vorteilhafte Energieeffizienz erreicht werden, da das Serversystem keine gesonderte Nachricht zum Löschen der Anzeigeinformation an das Client-Gerät übermitteln muss. Es ist denkbar, dass für mehrere oder alle Teilabschnitte des elektronischen Papiers separate Timer in einem Speicher des Client-Geräts hinterlegt sind und/oder von dem Serversystem an das Client-Gerät übermittelt werden, insbesondere derart, dass die Anzeigedauer von Anzeigeinformationen für die Teilabschnitte des elektronischen Papiers individuell eingestellt werden kann.

Ein weiterer Gegenstand der vorliegenden Erfindung ist ein System zur Kommunikation zwischen einem Client-Gerät und einem Serversystem, insbesondere einem Cloud-System,
wobei das System das Serversystem und das Client-Gerät umfasst,
wobei das Client-Gerät eine Anzeigeeinrichtung, aufweisend ein elektronisches Papier, umfasst,
wobei das System derart konfiguriert ist, dass:
   -- eine Triggerinformation von dem Client-Gerät erhalten oder mithilfe des Client-Geräts erzeugt wird,
   -- in Abhängigkeit der Triggerinformation eine Triggernachricht von dem Client-Gerät an das Serversystem übermittelt wird,
   -- mithilfe des Serversystems und in Abhängigkeit der erhaltenen Triggernachricht ein erster Workflow ausgeführt wird,
wobei das System derart konfiguriert ist, dass während und/oder nach der Ausführung des ersten Workflows, mindestens eine Anzeigeinformation, insbesondere betreffend den ersten Workflow, von dem Serversystem an das Client-Gerät übermittelt wird,
wobei das System derart konfiguriert ist, dass die mindestens eine Anzeigeinformation mithilfe des elektronischen Papiers der Anzeigeeinrichtung des Client-Geräts angezeigt wird.

Ein weiterer Gegenstand der vorliegenden Erfindung ist ein Client-Gerät, insbesondere zur Verwendung in einem System gemäß einer Ausführungsform der vorliegenden Erfindung,
wobei das Client-Gerät eine Anzeigeeinrichtung, aufweisend ein elektronisches Papier, umfasst,
wobei das Client-Gerät derart konfiguriert ist, dass:
   -- eine Triggerinformation von dem Client-Gerät erhalten oder mithilfe des Client-Geräts erzeugt wird,
   -- in Abhängigkeit der Triggerinformation eine Triggernachricht von dem Client-Gerät an das Serversystem übermittelt wird, wobei die Triggernachricht derart konfiguriert ist, dass mithilfe des Serversystems und in Abhängigkeit der erhaltenen Triggernachricht ein erster Workflow ausgeführt wird,
wobei das Client-Gerät zum Erhalten mindestens einer Anzeigeinformation, insbesondere betreffend den ersten Workflow, von dem Serversystem konfiguriert ist,
wobei das Client-Gerät derart konfiguriert ist, dass die mindestens eine Anzeigeinformation mithilfe des elektronischen Papiers der Anzeigeeinrichtung des Client-Geräts angezeigt wird.

Ein weiterer Gegenstand der Erfindung ist ein Serversystem, insbesondere zur Verwendung in einem System gemäß einer Ausführungsform der vorliegenden Erfindung, wobei das Serversystem zum Erhalten einer Triggernachricht von einem Client-Gerät konfiguriert ist,
wobei die Triggernachricht in Abhängigkeit einer Triggerinformation von dem Client-Gerät an das Serversystem übermittelt wird,
wobei das Serversystem derart konfiguriert ist, dass mithilfe des Serversystems und in Abhängigkeit der erhaltenen Triggernachricht ein erster Workflow ausgeführt wird,
wobei das Serversystem derart konfiguriert ist, dass während und/oder nach der Ausführung des ersten Workflows, mindestens eine Anzeigeinformation, insbesondere betreffend den ersten Workflow, von dem Serversystem an das Client-Gerät übermittelt wird, wobei die mindestens eine Anzeigeinformation zur Anzeige mithilfe eines elektronischen Papiers einer Anzeigeeinrichtung des Client-Geräts konfiguriert ist.

Ein weiterer Gegenstand der Erfindung ist ein Computerprogramm, umfassend Befehle, die bei der Ausführung des Computerprogramms durch ein System gemäß einer Ausführungsform der vorliegenden Erfindung, insbesondere durch ein Client-Gerät, ein Serversystem und optional eine externe Einrichtung, das System, insbesondere das Client-Gerät, das Serversystem und optional die externe Einrichtung, dazu veranlasst, ein Verfahren nach einer Ausführungsform der vorliegenden Erfindung auszuführen.

Für das erfindungsgemäße System, Client-Gerät, Serversystem und Computerprogramm können die Vorteile und Ausgestaltungen Anwendung finden, die bereits im Zusammenhang mit dem erfindungsgemäßen Verfahren oder im Zusammenhang mit einer Ausführungsform des erfindungsgemäßen Verfahrens beschrieben worden sind.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung.

Hierin zeigt:
- Fig. 1: eine schematische Darstellung eines Client-Geräts gemäß einem Ausführungsbeispiel der vorliegenden Erfindung;
- Fig. 2: eine schematische Darstellung eines Systems gemäß einem Ausführungsbeispiel der vorliegenden Erfindung;
- Fig. 3: eine schematische Darstellung eines Systems gemäß einem Ausführungsbeispiel der vorliegenden Erfindung; und
- Fig. 4: eine schematische Darstellung eines Systems gemäß einem Ausführungsbeispiel der vorliegenden Erfindung.
- Fig. 5: eine schematische Darstellung eines Systems gemäß einem Ausführungsbeispiel der vorliegenden Erfindung.

Die vorliegende Erfindung wird mit Bezug auf besondere Ausführungen und mit Bezug zu den beiliegenden Zeichnungen beschrieben, wobei jedoch die Erfindung nicht auf diese Ausführungen und auf diese Zeichnungen beschränkt ist, sondern durch die beigefügten Patentansprüche 1-13 bestimmt ist. In den Zeichnungen können zu Darstellungszwecken bestimmte Elemente vergrößert bzw. übertrieben sowie nicht maßstabsgerecht dargestellt sein.

Falls nichts anderes spezifisch angegeben wird, umfasst die Verwendung eines unbestimmten oder bestimmten Artikels mit Bezug auf ein Wort in der Einzahl, beispielsweise "ein", "eine", "eines", "der", "die", "das", auch die Mehrzahl eines solchen Wortes. Die Bezeichnungen "erster", "erste", "erstes", "zweiter", "zweite", "zweites" und so fort in der Beschreibung und in den Ansprüchen werden zur Unterscheidung zwischen ähnlichen oder zu unterscheidenden gleichen Elementen verwendet und nicht zwingend zur Beschreibung einer zeitlichen oder sonstigen Abfolge. Die derart benutzten Begriffe sind grundsätzlich als unter entsprechenden Bedingungen austauschbar anzusehen.

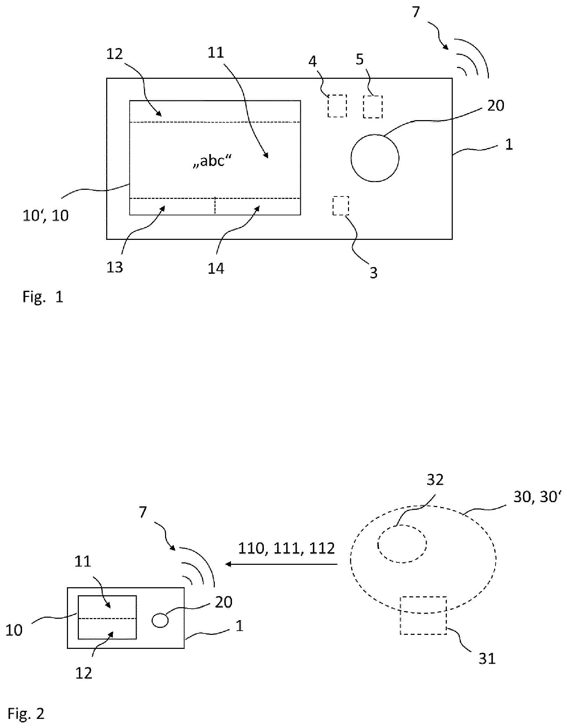

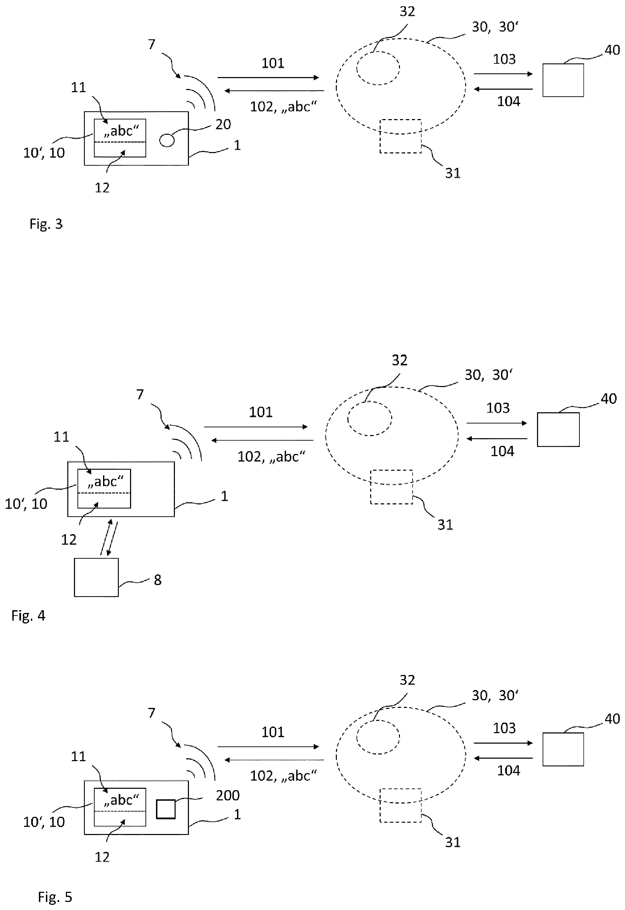

In **Figur 1** ist eine schematische Darstellung eines Client-Geräts 1 gemäß einer Ausführungsform der vorliegenden Erfindung gezeigt. Das Client-Gerät 1 umfasst eine Anzeigeeinrichtung 10', die mithilfe eines elektronischen Papiers 10 ausgebildet ist. Ferner umfasst das Client-Gerät 1 Kommunikationsmittel 7, mit denen eine direkte Anbindung an ein Telekommunikationsnetz möglich ist, insbesondere ohne ein dazwischengeschaltetes lokales Gateway. Mithilfe der Kommunikationsmittel 7 kann das Client-Gerät 1 vorzugsweise über eine Low Power Wide Area (LPWA)-Technologie, insbesondere Narrowband-loT, an das Telekommunikationsnetz angebunden sein und mit einem Serversystem 30 kommunizieren. Das Client-Gerät 1 umfasst ferner einen Speicher 4, in dem eine Identifikationsinformation zur Identifikation des Client-Geräts 1, beispielsweise eine IMEI (International Mobile Equipment Identity) oder eine IMSI (International Mobile Subscriber Identity), hinterlegt ist. Ferner umfasst das Client-Gerät 1 einen Speicher 5, in dem Konfigurationsinformationen 111 für die Anzeigeeinrichtung 10' des Client-Geräts 1 hinterlegt werden können. Es ist beispielsweise möglich, dass derartige Konfigurationsinformationen 111 eine örtliche Aufteilung des elektronischen Papiers 10 in Teilabschnitte 11, 12, 13, 14 betreffen und/oder eine Zuordnung von bestimmten Typen von Anzeigeinformationen zu bestimmten Teilabschnitten 11, 12, 13, 14. Solche Typen von Anzeigeinformationen können beispielsweise Fehlermeldungen, Preisinformationen, Statusinformationen, Messwertinformationen, technische Informationen zu einem Gegenstand oder einer Dienstleistung, Zahlungsinformationen, insbesondere im Rahmen von Smart Contracts, usw. betreffen. Solche Konfigurationsinformationen 111 können von dem Serversystem 30 an das Client-Gerät 1 übermittelt werden. Ferner ist es denkbar, dass der Speicher 5 weitere Konfigurationsinformationen 112 für die Anzeigeeinrichtung 10' des Client-Geräts 1 umfasst. Derartige weitere Konfigurationsinformationen 112 für die Anzeigeeinrichtung 10' umfassen insbesondere Daten zu einer oder mehreren Schriftgrößen, insbesondere zumindest zur Darstellung der Anzeigeinformation, und/oder Daten zu einer oder mehreren Schriftarten (Fonts), insbesondere zumindest zur Darstellung der Anzeigeinformation, und/oder Formatierungsinformationen, insbesondere zumindest zur Darstellung der Anzeigeinformation. Solche weiteren Konfigurationsinformationen 112 für die Anzeigeeinrichtung 10' können von dem Serversystem 30 an das Client-Gerät 1 übermittelt werden oder bereits in dem Speicher 5 des Client-Geräts 1 hinterlegt sein. Durch die im Speicher 5 vorhandenen Daten zu den Schriftgrößen und/oder Schriftarten ist es möglich, dass die von dem Serversystem 30 an das Client-Gerät 1 übermittelten Anzeigeinformationen 102 zeichenkodierte Textinformationen und/oder Binärcode umfassen, wobei die zur Darstellung der Anzeigeinformationen 102 nötigen Daten zu Schriftgröße und/oder Schriftart bereits im dem Speicher 5 vorhanden sind und daher nicht jedes Mal mit den Anzeigeinformationen 102 übertragen werden müssen. Ferner umfasst das Client-Gerät 1 einen Energiespeicher 3 und/oder eine Energy-Harvesting-Einrichtung 3. Einige oder alle der Speicher 3, 4, 5 können als separate Speicher oder als gemeinsamer Speicher ausgebildet sein. Das Client-Gerät 1 weist eine Eingabeeinrichtung 20 auf. Die Eingabeeinrichtung 20 ist insbesondere ein Druckknopf. In Abhängigkeit der Betätigung der Eingabeeinrichtung 20 ist eine Triggerinformation im Client-Gerät 1 erzeugbar. Die Betätigung der Eingabeeinrichtung 20 kann derart die Übermittlung einer Triggernachricht 101 anstoßen (vgl. Figur 3). Alternativ oder zusätzlich zu der Eingabeeinrichtung 20 kann das Client-Gerät eine Sensoreinrichtung 8 umfassen oder mit einer Sensoreinrichtung 8 in lokaler Kommunikationsverbindung stehen (nicht dargestellt). Es ist beispielsweise denkbar, dass die Sensoreinrichtung 8 teilweise oder vollständig auf einem printed circuit board (PCB) des Client-Geräts 1 ausgebildet ist, wobei das PCB vorzugsweise ferner zur Steuerung des Client-Geräts 1 eingerichtet ist. Die Triggerinformation kann in diesem Fall in Abhängigkeit einer Messung der Sensoreinrichtung 8 erzeugt werden.

Das elektronische Papier 10 des Client-Geräts 1 ist insbesondere ein durchgängiges elektronisches Papier 10, das sich über alle Teilabschnitte 11, 12, 13, 14 erstreckt. Die Teilabschnitte 11, 12, 13, 14, insbesondere deren Anzahl, Größe und/oder relative örtliche Anordnung zueinander ist durch das Serversystem 30 konfigurierbar, insbesondere durch die Übermittlung mindestens einer Konfigurationsinformation 111 von dem Serversystem 30 an das Client-Gerät 1. Hierdurch wird eine besonders vorteilhafte und flexible Konfiguration der Anzeigeeinrichtung 10' ermöglicht, die besonders bevorzugt ohne einen manuellen Eingriff am Client-Gerät 1 durchgeführt werden kann. Insbesondere kann eine Konfiguration der Anzeigeeinrichtung 10' und/oder des elektronischen Papiers 10 durch Übermittlung einer entsprechenden Konfigurationsinformation 111 von dem Serversystem 30 auf eine Vielzahl von Client-Geräten angewandt werden, sodass eine vorteilhafte und effiziente Skalierung möglich wird.

In **Figur 2** ist eine schematische Darstellung eines Systems gemäß einem Ausführungsbeispiel der vorliegenden Erfindung gezeigt. Insbesondere ist eine Konfiguration des Client-Geräts 1 und/oder der Anzeigeeinrichtung 10' mithilfe eines Serversystems 30 dargestellt. Das Serversystem ist ein Cloud-System 30'. Vorzugsweise umfasst das Client-Gerät 1 die Speicher 3, 4, 5 (nicht dargestellt). Das Serversystem 30 übermittelt Konfigurationsinformationen 111 für die Anzeigeeinrichtung 10' des Client-Geräts 1 an das Client-Gerät 1. Es ist beispielsweise möglich, dass derartige Konfigurationsinformationen 111 eine örtliche Aufteilung des elektronischen Papiers 10 in Teilabschnitte 11, 12, 13, 14 betreffen und/oder eine Zuordnung von bestimmten Typen von Anzeigeinformationen zu bestimmten Teilabschnitten 11, 12, 13, 14. Zusätzlich können weitere Konfigurationsinformationen 112 für die Anzeigeeinrichtung 10' des Client-Geräts 1 von dem Serversystem 30 an das Client-Gerät 1 übermittelt werden. Derartige weitere Konfigurationsinformationen 112 für die Anzeigeeinrichtung 10' umfassen insbesondere Daten zu einer oder mehreren Schriftgrößen und/oder Daten zu einer oder mehreren Schriftarten, die für die Darstellung von Anzeigeinformationen 102 auf dem elektronischen Papier 10 verwendbar sind. Des Weiteren können Konfigurationsinformationen 110 von dem Serversystem 30 an das Client-Gerät übermittelt werden. Solche Konfigurationsinformationen 110 sind insbesondere zur Konfiguration und/oder Einrichtung des Client-Geräts 1 vorgesehen und umfassen vorzugsweise eine Firmware für das Client-Gerät 1, und/oder Informationen zur Konfiguration des Client-Geräts 1 derart, dass das Client-Gerät 1 zur Erkennung und/oder Erfassung und/oder Erzeugung einer Triggerinformation eingerichtet wird, und/oder Informationen zur Konfiguration des Client-Geräts 1 derart, dass das Client-Gerät 1 zur Erzeugung einer Triggernachricht 101 in Abhängigkeit der Triggerinformation eingerichtet wird.

Die Konfigurationsinformationen 110, 111, 112 können von dem Serversystem 30 an das Client-Gerät 1 übermittelt werden und in dem Speicher 5 des Client-Geräts 1 gespeichert werden.

Es ist bevorzugt, dass einige, mehrere oder alle der Konfigurationsinformationen 110, 111, 112 mithilfe einer Programmierschnittstelle 31 des Serversystems 30 durch einen Nutzer oder zukünftigen Nutzer der Client-Geräts ausgewählt und/oder eingestellt werden können. Es ist alternativ oder zusätzlich möglich, dass einige, mehrere oder alle der Konfigurationsinformationen 110, 111, 112 in Abhängigkeit eines für das Client-Gerät 1 ausgewählten Workflows, beispielsweise eines ersten Workflows aus einer Mehrzahl von Workflows, an das Client-Gerät 1 übermittelt werden. Die Zuordnung des Client-Geräts zu einem Workflow, beispielsweise dem ersten Workflow aus der Mehrzahl von Workflows, kann vorzugsweise mithilfe der Programmierschnittstelle 31 durch einen Nutzer ausgewählt, konfiguriert und/oder festgelegt werden. Somit werden eine besonders nutzerfreundliche Inbetriebnahme und Anpassung der Funktion des Client-Geräts 1 möglich.

In **Figur 3** ist eine schematische Darstellung eines Systems gemäß einem Ausführungsbeispiel der vorliegenden Erfindung gezeigt. In einem ersten Schritt wird eine Triggerinformation mithilfe der Eingabeeinrichtung 20 des Client-Geräts 1 erzeugt. In einem zweiten Schritt wird in Abhängigkeit der Triggerinformation eine Triggernachricht 101 erzeugt und von dem Client-Gerät 1 an das Serversystem 30 übermittelt. Die Triggernachricht 101 ist spezifisch für die Triggerinformation und/oder umfasst die Triggerinformation. Ferner umfasst die Triggernachricht 101 eine Identifikationsinformation des Client-Geräts 1. Die Triggernachricht 101 wird von dem Serversystems 30 empfangen. Durch eine in der Datenbank 32 hinterlegte Zuordnung zwischen der Identifikationsinformation und der Triggerinformation einerseits und einem ersten Workflow andererseits, wird in einem dritten Schritt der erste Workflow von dem Serversystem 30 nach dem Erhalt der Triggernachricht 101 ausgeführt. Der erste Workflow umfasst in dem dargestellten Ausführungsbeispiel, dass von dem Serversystem 30 eine externe Nachricht 103 an eine externe Einrichtung 40 übermittelt wird. Die externe Nachricht 103 kann beispielsweise derart konfiguriert sein, dass die externe Einrichtung 40 durch die externe Nachricht 103 über die Triggerinformation informiert wird. Alternativ oder zusätzlich kann die externe Nachricht 103 beispielsweise eine Bestellung eines Gegenstands betreffen oder einen Notruf. Die externe Nachricht kann beispielsweise eine E-Mail oder ein beliebiger anderer Nachrichtentyp sein. Die externe Einrichtung 40 sendet eine Rückmeldung 104 als Antwort auf die externe Nachricht 103 an das Serversystem 30. Die Rückmeldung 104 betrifft beispielsweise eine Bestätigung, dass eine Bestellung mithilfe der externen Nachricht 103 erfolgreich aufgegeben wurde oder ein Notruf erfolgreich abgesetzt wurde. Zusätzlich oder alternativ kann die Rückmeldung 104 weitere Informationen enthalten, beispielsweise zu einem voraussichtlichen Lieferdatum der Bestellung oder einem Preis. Es ist auch denkbar, dass die Rückmeldung 104 eine Fehlermeldung oder Warnung umfasst, die beispielsweise angibt, dass eine mithilfe der externen Nachricht 103 aufgegebene Bestellung nicht erfolgreich war. In einem vierten Schritt, während und/oder nach dem dritten Schritt, wird mindestens eine Anzeigeinformation 102, betreffend den ersten Workflow, von dem Serversystem 30 an das Client-Gerät 1 übermittelt und mithilfe des elektronischen Papiers 10 der Anzeigeeinrichtung 10' des Client-Geräts 1 angezeigt. Die Anzeigeinformation 102 betrifft dabei vorzugsweise die Rückmeldung 104 und/oder mithilfe der Rückmeldung 104 übermittelte Informationen und/oder zumindest den ersten Workflow. Vorzugsweise handelt es sich bei der angezeigten Anzeigeinformation 102 um einen Text, welcher in Figur 3 mit dem Platzhalter "abc" bezeichnet ist. Somit können einem Nutzer am Ort des Client-Geräts 1 Details zu dem ersten Workflow oder zu aufgetretenen Problemen oder Fehlern effizient mitgeteilt werden. Der Nutzer kann somit Gegenmaßnahmen einleiten oder technische Prozesse in Abhängigkeit der Anzeigeinformationen anpassen.

In **Figur 4** ist eine schematische Darstellung eines Systems gemäß einem Ausführungsbeispiel der vorliegenden Erfindung gezeigt. Im Unterscheid zu Figur 3 ist das Client-Gerät 1 dabei lokal mit einer Sensoreinrichtung 8 verbunden, insbesondere kabellos oder kabelgebunden, oder umfasst eine Sensoreinrichtung 8. Es ist denkbar, dass das Client-Gerät 1 zusätzlich eine Eingabeeinrichtung 20 umfasst (nicht dargestellt). Im ersten Schritt wird die Triggerinformation in Abhängigkeit einer Messung der Sensoreinrichtung 8 erzeugt. Beispielsweise wird die Triggerinformation erzeugt, wenn die Sensoreinrichtung 8 eine Überschreitung eines Schwellenwerts detektiert. Als Sensoreinrichtung 8 kommen gemäß unterschiedlicher Ausführungsform der vorliegenden Erfindung verschiedene Sensortypen infrage, beispielsweise ein Temperatursensor, ein Geschwindigkeitssensor, ein Körperschallsensor, ein akustischer Sensor, ein Drucksensor, ein optischer Sensor, ein Infratotsensor, ein Gewichtssensor, ein Gassensor, insbesondere ein CO₂-Sensor, und/oder ein Feuchtigkeitssensor. Die weiteren Schritte des Verfahrens können beispielsweise entsprechend dem anhand der Figur 3 erläuterten Ausführungsbeispiel erfolgen. Es ist beispielsweise denkbar, dass die Sensoreinrichtung 8 detektiert, dass ein Stauraum geleert wurde oder lediglich eine geringe Restmenge an Gegenständen in dem Stauraum vorhanden ist, sodass mithilfe der Triggernachricht 101 und dem ersten Workflow eine Nachbestellung von Gegenständen in Auftrag gegeben wird. Alternativ ist es beispielsweise denkbar, dass die Sensoreinrichtung 8 detektiert, dass ein Reservoir in einem technischen Prozess befüllt wurde, beispielswiese mit einem in dem technischen Prozess erzeugten Nutzprodukt oder Abfallprodukt, wobei mithilfe der Triggernachricht 101 und dem ersten Workflow eine Abholung des gefüllten Reservoirs oder ein Leeren des Reservoirs beauftragt wird. Es ergeben sich dabei eine Vielzahl von Implementierungsmöglichkeiten des Client-Geräts 1 in technischen und industriellen Abläufen, wobei das Client-Gerät 1 jeweils effizient und flexibel durch Zuordnung zu einem passenden Workflow in diese Abläufe integriert werden kann.

Es ist zusätzlich oder alternativ denkbar, dass Messwerte, die mithilfe der Sensoreinrichtung 8 ermittelt wurden, mithilfe der Triggernachricht 101 an das Serversystem 30 übermittelt werden. Ferner ist es denkbar, dass die Messwerte von dem Sensorsystem 30 an die externe Einrichtung 40 übermittelt werden, insbesondere als Teil einer externen Nachricht 103. Es ist denkbar, dass eine Auswertung der Messwerte mithilfe des Serversystems 30 oder der externen Einrichtung 40 durchgeführt wird. Ein Ergebnis dieser Auswertung kann als Anzeigeinformation 102 an das Client-Gerät 1 übermittelt werden und einem Nutzer über die Anzeigeeinrichtung 10' mitgeteilt werden. Somit kann beispielsweise eine vorteilhafte Überwachung eines Maschinenzustands oder einer Maschinenfunktion implementiert werden, deren Ergebnis einem Nutzer lokal durch das Client-Gerät 1 mitgeteilt werden kann. Das Client-Gerät 1 ist dabei beispielswiese an der zu überwachenden Maschine oder in deren Umgebung angeordnet. Der Nutzer wird so in die Lage versetzt, schnell und effizient Gegenmaßnahmen einzuleiten, insbesondere im Falle eines Fehlers oder nahenden Fehlers der Maschinenfunktion. Es ist alternativ oder zusätzlich möglich, dass die dargestellten Anzeigeinformation 102 Sensorinformationen bzw. Sensordaten von einer Sensoreinrichtung 8 umfassen und/oder dass die dargestellten Anzeigeinformation 102 von Sensorinformationen von einer Sensoreinrichtung 8 abhängen.

In **Figur 5** ist eine schematische Darstellung eines Systems gemäß einem Ausführungsbeispiel der vorliegenden Erfindung gezeigt. In einem ersten Schritt wird eine Triggerinformation mithilfe der Aufwacheinheit 200 des Client-Geräts 1 erzeugt. Hierzu empfängt die Aufwacheinheit 200 eine Aufwachnachricht, beispielsweise von dem Serversystem 30. In einem zweiten Schritt wird in Abhängigkeit der Triggerinformation eine Triggernachricht 101 erzeugt und von dem Client-Gerät 1 an das Serversystem 30 übermittelt. Die Triggernachricht 101 ist spezifisch für die Triggerinformation und/oder umfasst die Triggerinformation. Ferner umfasst die Triggernachricht 101 eine Identifikationsinformation des Client-Geräts 1. Die Triggernachricht 101 wird von dem Serversystems 30 empfangen. Durch eine in der Datenbank 32 hinterlegte Zuordnung zwischen der Identifikationsinformation und der Triggerinformation einerseits und einem ersten Workflow andererseits, wird in einem dritten Schritt der erste Workflow von dem Serversystem 30 nach dem Erhalt der Triggernachricht 101 ausgeführt. Der erste Workflow umfasst in dem dargestellten Ausführungsbeispiel, dass von dem Serversystem 30 eine externe Nachricht 103 an eine externe Einrichtung 40 übermittelt wird. Die externe Nachricht 103 kann beispielsweise derart konfiguriert sein, dass die externe Einrichtung 40 durch die externe Nachricht 103 über die Triggerinformation informiert wird. Alternativ oder zusätzlich kann die externe Nachricht 103 beispielsweise eine Bestellung eines Gegenstands betreffen oder einen Notruf. Die externe Nachricht kann beispielsweise eine E-Mail oder ein beliebiger anderer Nachrichtentyp sein. Die externe Einrichtung 40 sendet eine Rückmeldung 104 als Antwort auf die externe Nachricht 103 an das Serversystem 30. Die Rückmeldung 104 betrifft beispielsweise eine Bestätigung, dass eine Bestellung mithilfe der externen Nachricht 103 erfolgreich aufgegeben wurde oder ein Notruf erfolgreich abgesetzt wurde. Zusätzlich oder alternativ kann die Rückmeldung 104 weitere Informationen enthalten, beispielsweise zu einem voraussichtlichen Lieferdatum der Bestellung oder einem Preis. Es ist auch denkbar, dass die Rückmeldung 104 eine Fehlermeldung oder Warnung umfasst, die beispielsweise angibt, dass eine mithilfe der externen Nachricht 103 aufgegebene Bestellung nicht erfolgreich war. In einem vierten Schritt, während und/oder nach dem dritten Schritt, wird mindestens eine Anzeigeinformation 102, betreffend den ersten Workflow, von dem Serversystem 30 an das Client-Gerät 1 übermittelt und mithilfe des elektronischen Papiers 10 der Anzeigeeinrichtung 10' des Client-Geräts 1 angezeigt. Die Anzeigeinformation 102 betrifft dabei vorzugsweise die Rückmeldung 104 und/oder mithilfe der Rückmeldung 104 übermittelte Informationen und/oder zumindest den ersten Workflow. Vorzugsweise handelt es sich bei der angezeigten Anzeigeinformation 102 um einen Text, welcher in Figur 5 mit dem Platzhalter "abc" bezeichnet ist. Somit können einem Nutzer am Ort des Client-Geräts 1 Details zu dem ersten Workflow oder zu aufgetretenen Problemen oder Fehlern effizient mitgeteilt werden. Der Nutzer kann somit Gegenmaßnahmen einleiten oder technische Prozesse in Abhängigkeit der Anzeigeinformationen anpassen.

## Patentansprüche

1. Verfahren zur Kommunikation zwischen einem Client-Gerät (1) und einem Serversystem (30), insbesondere einem Cloud-System (30'),
wobei das Client-Gerät (1) eine Anzeigeeinrichtung (10'), aufweisend ein elektronisches Papier (10), umfasst,
wobei das Verfahren zumindest die folgenden Schritte umfasst:
-- in einem ersten Schritt wird eine Triggerinformation von dem Client-Gerät (1) erhalten oder mithilfe des Client-Geräts (1) erzeugt,
-- in einem zweiten Schritt, nach dem ersten Schritt, wird in Abhängigkeit der Triggerinformation eine Triggernachricht (101) von dem Client-Gerät (1) an das Serversystem (30) übermittelt,
-- in einem dritten Schritt, nach dem zweiten Schritt, wird mithilfe des Serversystems (30) und in Abhängigkeit der erhaltenen Triggernachricht (101) ein erster Workflow ausgeführt,
-- in einem vierten Schritt, während und/oder nach dem dritten Schritt, wird mindestens eine Anzeigeinformation (102), insbesondere betreffend den ersten Workflow, von dem Serversystem (30) an das Client-Gerät (1) übermittelt,
wobei die mindestens eine Anzeigeinformation (102) mithilfe des elektronischen Papiers (10) der Anzeigeeinrichtung (10') des Client-Geräts (1) angezeigt wird, wobei in einem Konfigurationsschritt, vor dem ersten Schritt, das Serversystem mindestens eine Konfigurationsinformation (110) an das Client-Gerät übermittelt, **dadurch gekennzeichnet, dass**
die mindestens eine Konfigurationsinformation (110) eine oder mehrere der folgenden Informationen umfasst:
-- mindestens eine Information zur Konfiguration des Client-Geräts (1) derart, dass das Client-Gerät (1) zur Erkennung und/oder Erfassung und/oder Erzeugung der Triggerinformation eingerichtet ist,
-- mindestens eine Information zur Konfiguration des Client-Geräts (1) derart, dass das Client-Gerät (1) zur Erzeugung der Triggernachricht (101) in Abhängigkeit der Triggerinformation eingerichtet ist,
wobei das Client-Gerät (1) eine Sensoreinrichtung (8) umfasst oder mit einer Sensoreinrichtung (8) in Kommunikationsverbindung steht, wobei die Triggerinformation im ersten Schritt in Abhängigkeit einer Messung der Sensoreinrichtung (8) erzeugt wird,
wobei Messwerte, die mithilfe der Sensoreinrichtung (8) ermittelt wurden, mithilfe der Triggernachricht (101) an das Serversystem (30) übermittelt werden, wobei eine Auswertung der Messwerte mithilfe des Serversystems (30) oder einer externen Einrichtung (40) durchgeführt wird, wobei ein Ergebnis der Auswertung als Anzeigeinformation (102) an das Client-Gerät (1) übermittelt wird und einem Nutzer über die Anzeigeeinrichtung (10') mitgeteilt wird.

2. Verfahren nach Anspruch 1,
wobei das Serversystem (30) Zugriff auf eine Datenbank (32) hat, wobei in der Datenbank (32) eine Zuordnung:
-- zwischen der Triggernachricht (101) und dem ersten Workflow und/oder
-- zwischen der Triggerinformation und dem ersten Workflow und/oder
-- zwischen einer Identifikationsinformation des Client-Geräts (1) und dem ersten Workflow
hinterlegt ist,
vorzugsweise wobei für den Fall, dass in der Datenbank (32) eine Zuordnung zwischen der Triggerinformation und dem ersten Workflow hinterlegt ist, die im zweiten Schritt übermittelte Triggernachricht (101) die Triggerinformation umfasst, und/oder vorzugsweise wobei für den Fall, dass in der Datenbank (32) eine Zuordnung zwischen der Identifikationsinformation des Client-Geräts (1) und dem ersten Workflow hinterlegt ist, die im zweiten Schritt übermittelte Triggernachricht (101) die Identifikationsinformation des Client-Geräts (1) umfasst.

3. Verfahren nach Anspruch 2, wobei - im dritten Schritt - der erste Workflow für die Triggernachricht (101) mithilfe der in der Datenbank (32) hinterlegten Zuordnung ausgewählt wird, insbesondere aus einer Mehrzahl von Workflows.

4. Verfahren nach einem der vorhergehenden Ansprüche, wobei die Ausführung des ersten Workflows im dritten Schritt umfasst, dass eine externe Nachricht (103) von dem Serversystem (30) an eine externe Einrichtung (40) übermittelt wird,
vorzugsweise wobei
-- mithilfe der externen Nachricht (103) eine Bestellung von mindestens einem Gegenstand und/oder mindestens einer Dienstleistung beauftragt wird, und/oder
-- mithilfe der externen Nachricht (103) die externe Einrichtung (40) über die Triggerinformation informiert wird, und/oder
-- mithilfe der externen Nachricht (103) ein Datensatz an die externe Einrichtung (40) übermittelt wird, wobei der Datensatz dem ersten Workflow zugeordnet ist oder bei der Ausführung des ersten Workflows erzeugt wird.

5. Verfahren nach einem der vorhergehenden Ansprüche, wobei das Serversystem (30) eine Programmierschnittstelle (31), insbesondere ein API, application programming interface, aufweist, wobei mithilfe der Programmierschnittstelle (31), insbesondere durch einen Nutzer:
- der erste Workflow und/oder die Mehrzahl von Workflows, und/oder
- mindestens eine dem ersten Workflow zugeordnete Eigenschaft, insbesondere ein vorgesehener Empfänger der externen Nachricht (103) und/oder ein Inhalt der externen Nachricht (103), und/oder
- die Zuordnung zwischen der Triggernachricht (101) und dem ersten Workflow, und/oder
- die Zuordnung zwischen der Triggerinformation und dem ersten Workflow, und/oder
- die Zuordnung zwischen einer Identifikationsinformation des Client-Geräts (1) und dem ersten Workflow, und/oder
- die Identifikationsinformation des Client-Geräts (1),
einstellbar und/oder änderbar ist.

6. Verfahren nach einem der vorhergehenden Ansprüche, wobei das Client-Gerät (1) eine Eingabeeinrichtung (20) umfasst, wobei die Triggerinformation im ersten Schritt durch eine Betätigung der Eingabeeinrichtung (20) erzeugt wird, wobei bevorzugt die Eingabeeinrichtung (20) mindestens einen Druckknopf oder ein Touchpad umfasst.

7. Verfahren nach einem der vorhergehenden Ansprüche, wobei die Sensoreinrichtung (8) als Feuchtigkeitssensor ausgebildet ist und die Triggerinformation im ersten Schritt erzeugt wird, wenn die Messung der Feuchtigkeit, insbesondere Luftfeuchtigkeit, einen vorgegebenen Schwellenwert überschreitet.

8. Verfahren nach einem der vorhergehenden Ansprüche, wobei das Client-Gerät (1) eine Aufwacheinheit (200) aufweist, welche das Client-Gerät (1) bei Empfang einer Aufwachnachricht aus einem Energiesparzustand in einen Betriebszustand versetzt und die Triggerinformation im ersten Schritt durch die Aufwachnachricht bzw. den Übergang des Client-Geräts aus dem Energiesparzustand in den Betriebszustand erzeugt wird.

9. Verfahren nach einem der vorhergehenden Ansprüche, wobei die im dritten Schritt übermittelte Anzeigeinformation (102):
- mindestens eine dem ersten Workflow zugeordnete Eigenschaft, und/oder
- die Übermittlung der externen Nachricht (103), insbesondere eine Information dazu, ob eine Übermittlung der externen Nachricht (103) erfolgt ist und/oder ob mithilfe der externen Nachricht (103) eine Bestellung aufgebeben wurde, und/oder
- eine Rückmeldung (104) der externen Einrichtung (40) als Antwort auf die externe Nachricht (103), insbesondere eine Rückmeldung (104) der externen Einrichtung (40) betreffend einen Bestellstatus einer mithilfe der externen Nachricht (103) aufgegebenen Bestellung,
betrifft.

10. Verfahren nach einem der vorhergehenden Ansprüche, wobei mindestens eine Konfigurationsinformation (111) für die Anzeigeeinrichtung (10') des Client-Geräts (1) betreffend:
-- eine örtliche Aufteilung des elektronischen Papiers (10) in Teilabschnitte (11, 12, 13, 14), und/oder
-- eine Zuordnung von Teilabschnitten (11, 12, 13, 14) des elektronischen Papiers (10) zu bestimmten Anzeigeinformationen und/oder zu Typen von Anzeigeinformationen,
von dem Serversystem (30) an das Client-Gerät (1) übermittelt wird, bevorzugt vor dem vierten Schritt oder gemeinsam mit der Anzeigeinformation (102) im vierten Schritt.

11. Verfahren nach Anspruch 10, wobei die Konfigurationsinformation (111) für die Anzeigeeinrichtung (10') des Client-Geräts (1) vor der Übermittlung an das Client-Gerät (1) mithilfe der Programmierschnittstelle (31) des Serversystems (30), insbesondere durch einen Nutzer, eingestellt und/oder ausgewählt wird.

12. System zur Kommunikation zwischen einem Client-Gerät (1) und einem Serversystem (30), insbesondere einem Cloud-System (30'), wobei das System das Serversystem (30) und das Client-Gerät (1) umfasst,
wobei das Client-Gerät (1) eine Anzeigeeinrichtung (10'), aufweisend ein elektronisches Papier (10), umfasst,
wobei das System derart konfiguriert ist, dass:
-- eine Triggerinformation von dem Client-Gerät (1) erhalten oder mithilfe des Client-Geräts (1) erzeugt wird,
-- in Abhängigkeit der Triggerinformation eine Triggernachricht (101) von dem Client-Gerät (1) an das Serversystem (30) übermittelt wird,
-- mithilfe des Serversystems (30) und in Abhängigkeit der erhaltenen Triggernachricht (101) ein erster Workflow ausgeführt wird,
wobei das System derart konfiguriert ist, dass während und/oder nach der Ausführung des ersten Workflows, mindestens eine Anzeigeinformation (102), insbesondere betreffend den ersten Workflow, von dem Serversystem (30) an das Client-Gerät (1) übermittelt wird,
wobei das System derart konfiguriert ist, dass die mindestens eine Anzeigeinformation (102) mithilfe des elektronischen Papiers (10) der Anzeigeeinrichtung (10') des Client-Geräts (1) angezeigt wird
wobei das System derart konfiguriert ist, dass in einem Konfigurationsschritt, vor dem ersten Schritt, das Serversystem mindestens eine Konfigurationsinformation (110) an das Client-Gerät übermittelt, **dadurch gekennzeichnet, dass** die mindestens eine Konfigurationsinformation (110) eine oder mehrere der folgenden Informationen umfasst:
-- mindestens eine Information zur Konfiguration des Client-Geräts (1) derart, dass das Client-Gerät (1) zur Erkennung und/oder Erfassung und/oder Erzeugung der Triggerinformation eingerichtet ist,
-- mindestens eine Information zur Konfiguration des Client-Geräts (1) derart, dass das Client-Gerät (1) zur Erzeugung der Triggernachricht (101) in Abhängigkeit der Triggerinformation eingerichtet ist,
wobei das Client-Gerät (1) eine Sensoreinrichtung (8) umfasst oder mit einer Sensoreinrichtung (8) in Kommunikationsverbindung steht, wobei das System derart konfiguriert ist, dass die Triggerinformation im ersten Schritt in Abhängigkeit einer Messung der Sensoreinrichtung (8) erzeugt wird,
wobei das System derart konfiguriert ist, dass Messwerte, die mithilfe der Sensoreinrichtung (8) ermittelt wurden, mithilfe der Triggernachricht (101) an das Serversystem (30) übermittelt werden, wobei eine Auswertung der Messwerte mithilfe des Serversystems (30) oder einer externen Einrichtung (40) durchgeführt wird, wobei ein Ergebnis der Auswertung als Anzeigeinformation (102) an das Client-Gerät (1) übermittelt wird und einem Nutzer über die Anzeigeeinrichtung (10') mitgeteilt wird.

13. Computerprogramm, umfassend Befehle, die bei der Ausführung des Computerprogramms durch ein System gemäß Anspruch 12, das System dazu veranlasst, ein Verfahren nach einem der Ansprüche 1 bis 11 auszuführen.

## Claims

1. Method for communication between a client device (1) and a server system (30), in particular a cloud system (30'),
wherein the client device (1) comprises a display device (10') comprising an electronic paper (10),
wherein the method comprises at least the following steps:
-- in a first step, trigger information is received from the client device (1) or generated using the client device (1),
-- in a second step, after the first step, a trigger message (101) is transmitted from the client device (1) to the server system (30) depending on the trigger information,
-- in a third step, after the second step, by means of the server system (30) and depending on the trigger message (101) received, a first workflow is executed,
**--** in a fourth step, during and/or after the third step, at least one piece of display information (102), in particular relating to the first workflow, is transmitted from the server system (30) to the client device (1),
wherein the at least one piece of display information (102) is displayed by means of the electronic paper (10) of the display device (10') of the client device (1),
wherein in a configuration step, before the first step, the server system transmits at least one piece of configuration information (110) to the client device,
**characterized in that**
the at least one piece of configuration information (110) comprises one or more of the following pieces of information:
-- at least one piece of information for configuring the client device (1) such that the client device (1) is set up to recognize and/or detect and/or generate the trigger information,
-- at least one piece of information for configuring the client device (1) such that the client device (1) is set up to generate the trigger message (101) depending on the trigger information,
wherein the client device (1) comprises a sensor device (8) or is in communication with a sensor device (8), wherein the trigger information is generated in the first step depending on a measurement of the sensor device (8),
wherein measured values, which were determined by means of the sensor device (8), are transmitted to the server system (30) by means of the trigger message (101),
wherein an evaluation of the measured values is carried out by means of the server system (30) or an external device (40) is performed, wherein a result of the evaluation is transmitted to the client device (1) as display information (102) and is communicated to a user via the display device (10').

2. Method according to claim 1,
wherein the server system (30) has access to a database (32), wherein in the database (32) a mapping is stored:
-- between the trigger message (101) and the first workflow and/or
-- between the trigger information and the first workflow and/or
-- between an identification information of the client device (1) and the first workflow,
preferably wherein, in the event that a mapping between the trigger information and the first workflow is stored in the database (32), the trigger message (101) transmitted in the second step comprises the trigger information, and/or
preferably wherein, in the event that an association between the identification information of the client device (1) and the first workflow is stored in the database (32), the trigger message (101) transmitted in the second step comprises the identification information of the client device (1).

3. Method according to claim 2, wherein - in the third step - the first workflow for the trigger message (101) is selected by means of the mapping stored in the database (32), in particular from a plurality of workflows.

4. Method according to any one of the preceding claims, wherein - in the third step - executing the first workflow comprises that an external message (103) is transmitted from the server system (30) to an external device (40),
preferably wherein
-- an order for at least one item and/or at least one service is placed by means of the external message (103), and/or
-- the external device (40) is informed of the trigger information by means of the external message (103), and/or
-- a data set is transmitted to the external device (40) by means of the external message (103), wherein the data set is associated with the first workflow or is generated during execution of the first workflow.

5. Method according to one of the preceding claims, wherein the server system (30) has a programming interface (31), in particular an API, application programming interface, wherein by means of the programming interface (31), in particular by a user:
- the first workflow and/or the plurality of workflows, and/or
- at least one characteristic assigned to the first workflow, in particular an intended recipient of the external message (103) and/or a content of the external message (103), and/or
- the mapping between the trigger message (101) and the first workflow, and/or
- the mapping between the trigger information and the first workflow, and/or
- the mapping between identification information of the client device (1) and the first workflow, and/or
- the identification information of the client device
(1), is adjustable and/or changeable.

6. Method according to one of the preceding claims, wherein the client device (1) comprises an input device (20), wherein the trigger information is generated in the first step by an actuation of the input device (20), wherein preferably the input device (20) comprises at least one push button or a touch pad.

7. Method according to one of the preceding claims, wherein the sensor device (8) is designed as a humidity sensor and the trigger information is generated in the first step if the measurement of the humidity, in particular air humidity, exceeds a predetermined threshold value.

8. Method according to any one of the preceding claims, wherein the client device (1) comprises a wake-up unit (200) which sets the client device (1) from an energy-saving state to an operating state upon receipt of a wake-up message, and the trigger information is generated in the first step by the wake-up message or the transition of the client device from the energy-saving state to the operating state.

9. Method according to any one of the preceding claims, wherein the display information (102) transmitted in the third step concerns:
- at least one characteristic associated with the first workflow, and/or
- the transmission of the external message (103), in particular a piece of information whether the external message (103) has been transmitted and/or whether an order has been placed using the external message (103), and/or
- a response (104) from the external device (40) in response to the external message (103), in particular a response (104) from the external device (40) concerning an order status of an order placed using the external message (103).

10. Method according to one of the preceding claims, wherein at least one piece of configuration information (111)for the display device (10') of the client device (1) concerning:
-- a local division of the electronic paper (10) into subsections (11, 12, 13, 14), and/or
-- an assignment of partial sections (11, 12, 13, 14) of the electronic paper (10) to specific display information and/or to types of display information,
is transmitted from the server system (30) to the client device (1), preferably before the fourth step or together with the display information (102) in the fourth step.

11. Method according to claim 10, wherein the configuration information (111)for the display device (10') of the client device (1) (1) is set and/or selected using the programming interface (31) of the server system (30), in particular by a user, before the transmission to the client device (1).

12. System for communication between a client device (1) and a server system (30), in particular a cloud system (30'), wherein the system comprises the server system (30) and the client device (1),
wherein the client device (1) comprises a display device (10') comprising an electronic paper (10),
wherein the system is configured such that:
-- trigger information is received from the client device (1) or generated using the client device (1),
-- a trigger message (101) is transmitted from the client device (1) to the server system (30) depending on the trigger information,
-- a first workflow is executed by means of the server system (30) and depending on the trigger message (101) received,
wherein the system is configured such that during and/or after the execution of the first workflow, at least one piece of display information (102), in particular relating to the first workflow, is transmitted from the server system (30) to the client device (1),
wherein the system is configured such that the at least one piece of display information (102) is displayed using the electronic paper (10) of the display device (10') of the client device (1),
wherein the system is configured such that in a configuration step, prior to the first step, the server system transmits at least one piece of configuration information (110) to the client device,
**characterized in that**
the at least one piece of configuration information (110) comprises one or more of the following information:
-- at least one piece of information for configuring the client device (1) in such a way that the client device (1) is set up to recognize and/or detect and/or generate the trigger information,
-- at least one piece of information for configuring the client device (1) such that the client device (1) is set up to generate the trigger message (101) depending on the trigger information,
wherein the client device (1) comprises a sensor device (8) or is in communication with a sensor device (8), wherein the system is configured such that the trigger information is generated in the first step depending on a measurement of the sensor device (8),
wherein the system is configured in such a way that measured values, which were determined by means of the sensor device (8), are transmitted to the server system (30) by means of the trigger message (101), wherein an evaluation of the measured values is carried out by means of the server system (30) or an external device (40), wherein a result of the evaluation is transmitted to the client device (1) as display information (102) and is communicated to a user via the display device (10').

13. Computer program comprising instructions which, when the computer program is executed by a system according to claim 12, causes the system to execute a method according to any one of claims 1 to 11.

## Revendications

1. Procédé de communication entre un appareil client (1) et un système serveur (30), en particulier un système en nuage (30'),
l'appareil client (1) comprenant un dispositif d'affichage (10') présentant un papier électronique (10), le procédé comprenant au moins les étapes suivantes :
-- dans une première étape, une information de déclenchement est reçue par l'appareil client (1) ou générée au moyen de l'appareil client (1),
-- dans une deuxième étape, après la première étape, un message de déclenchement (101) est transmis par l'appareil client (1) au système serveur (30) en fonction de l'information de déclenchement,
-- dans une troisième étape, après la deuxième étape, un premier flux de travail est exécuté au moyen du système serveur (30) et en fonction du message de déclenchement (101) reçu,
-- dans une quatrième étape, pendant et/ou après la troisième étape, au moins une information d'affichage (102), concernant en particulier le premier flux de travail, est transmise par le système serveur (30) à l'appareil client (1),
ladite au moins une information d'affichage (102) étant affichée au moyen du papier électronique (10) du dispositif d'affichage (10') de l'appareil client (1), le système serveur transmettant au moins une information de configuration (110) à l'appareil client dans une étape de configuration précédant la première étape, **caractérisé en ce que**
ladite au moins une information de configuration (110) comprend une ou plusieurs des informations qui suivent :
-- au moins une information pour la configuration de l'appareil client (1) de telle sorte que l'appareil client (1) soit configuré pour la reconnaissance et/ou la saisie et/ou la génération de l'information de déclenchement,
-- au moins une information pour la configuration de l'appareil client (1) de telle sorte que l'appareil client (1) soit configuré pour générer le message de déclenchement (101) en fonction de l'information de déclenchement,
l'appareil client (1) comprenant un dispositif capteur (8) ou étant en communication avec un dispositif capteur (8), l'information de déclenchement étant générée dans une première étape en fonction d'une mesure du dispositif capteur (8),
les valeurs mesurées, qui ont été déterminées au moyen du dispositif capteur (8), étant transmises au système serveur (30) au moyen du message de déclenchement (101), une évaluation des valeurs mesurées étant effectuée au moyen du système serveur (30) ou d'un dispositif externe (40), un résultat de l'évaluation étant transmis à l'appareil client (1) sous forme d'information d'affichage (102) et communiqué à un utilisateur via le dispositif d'affichage (10').

2. Procédé selon la revendication 1,
dans lequel le système serveur (30) a accès à une base de données (32), une association étant enregistrée dans la base de données (32) :
-- entre le message de déclenchement (101) et le premier flux de travail, et/ou
-- entre l'information de déclenchement et le premier flux de travail, et/ou
-- entre une information d'identification de l'appareil client (1) et le premier flux de travail,
de préférence, dans le cas où une association entre l'information de déclenchement et le premier flux de travail est enregistrée dans la base de données (32), le message de déclenchement (101) transmis lors de la deuxième étape comprend l'information de déclenchement, et/ou
de préférence, dans le cas où une association entre l'information d'identification de l'appareil client (1) et le premier flux de travail est enregistrée dans la base de données (32), le message de déclenchement (101) transmis lors de la deuxième étape comprend l'information d'identification de l'appareil client (1).

3. Procédé selon la revendication 2, dans lequel, lors de la troisième étape, le premier flux de travail pour le message de déclenchement (101) est sélectionné au moyen de l'association enregistrée dans la base de données (32), en particulier parmi une pluralité de flux de travail.

4. Procédé selon l'une des revendications précédentes, dans lequel l'exécution du premier flux de travail lors de la troisième étape comprend le fait qu'un message externe (103) est transmis par le système serveur (30) à un dispositif externe (40),
de préférence
-- au moyen du message externe (103), une commande d'au moins un article et/ou d'au moins un service est passée, et/ou
-- au moyen du message externe (103), le dispositif externe (40) est informé de l'information de déclenchement, et/ou
-- au moyen du message externe (103), un ensemble de données est transmis au dispositif externe (40), l'ensemble de données étant associé au premier flux de travail ou étant généré lors de l'exécution du premier flux de travail.

5. Procédé selon l'une des revendications précédentes, dans lequel le système serveur (30) comprend une interface de programmation (31), en particulier une API, « application programming interface », dans lequel, au moyen de l'interface de programmation (31), est réglable et/ou modifiable, en particulier par un utilisateur :
- le premier flux de travail et/ou la pluralité de flux de travail, et/ou
- au moins une propriété associée au premier flux de travail, en particulier un destinataire désigné du message externe (103) et/ou un contenu du message externe (103), et/ou
- l'association entre le message de déclenchement (101) et le premier flux de travail, et/ou
- l'association entre l'information de déclenchement et le premier flux de travail, et/ou
- l'association entre une information d'identification de l'appareil client (1) et le premier flux de travail, et/ou
- l'information d'identification de l'appareil client (1) .

6. Procédé selon l'une des revendications précédentes, dans lequel l'appareil client (1) comprend un dispositif d'entrée (20), l'information de déclenchement étant générée lors de la première étape par une action sur le dispositif d'entrée (20), le dispositif d'entrée (20) comprenant de préférence au moins un bouton-poussoir ou un pavé tactile.

7. Procédé selon l'une des revendications précédentes, dans lequel le dispositif capteur (8) est conçu sous la forme d'un capteur d'humidité et l'information de déclenchement est générée lors de la première étape lorsque la mesure de l'humidité, en particulier de l'humidité de l'air, dépasse une valeur seuil prédéfinie.

8. Procédé selon l'une des revendications précédentes, dans lequel l'appareil client (1) comprend une unité de réveil (200) qui, à la réception d'un message de réveil, fait passer l'appareil client (1) d'un état d'économie d'énergie à un état de fonctionnement, et l'information de déclenchement est générée lors de la première étape par le message de réveil ou par le passage de l'appareil client de l'état d'économie d'énergie à l'état de fonctionnement.

9. Procédé selon l'une des revendications précédentes, dans lequel l'information d'affichage (102) transmise lors de la troisième étape concerne :
- au moins une propriété associée au premier flux de travail, et/ou
- la transmission du message externe (103), en particulier une information indiquant si une transmission du message externe (103) a eu lieu et/ou si une commande a été passée au moyen du message externe (103), et/ou
- une réponse (104) du dispositif externe (40) au message externe (103), en particulier une réponse (104) du dispositif externe (40) concernant un statut de commande d'une commande passée au moyen du message externe (103).

10. Procédé selon l'une des revendications précédentes, dans lequel au moins une information de configuration (111) pour le dispositif d'affichage (10') de l'appareil client (1) concernant :
-- une division locale du papier électronique (10) en sous-sections (11, 12, 13, 14), et/ou
-- une affectation des sous-sections (11, 12, 13, 14) du papier électronique (10) à des informations d'affichage spécifiques et/ou à des types d'informations d'affichage,
est transmise par le système serveur (30) à l'appareil client (1), de préférence avant la quatrième étape ou conjointement avec l'information d'affichage (102) lors de la quatrième étape.

11. Procédé selon la revendication 10, dans lequel l'information de configuration (111) pour le dispositif d'affichage (10') de l'appareil client (1) est définie et/ou sélectionnée avant d'être transmise à l'appareil client (1), au moyen de l'interface de programmation (31) du système serveur (30), en particulier par un utilisateur.

12. Système de communication entre un appareil client (1) et un système serveur (30), en particulier un système en nuage (30'), le système comprenant le système serveur (30) et l'appareil client (1),
l'appareil client (1) comprenant un dispositif d'affichage (10') présentant un papier électronique (10), le système étant configuré de telle sorte que :
-- une information de déclenchement est reçue par l'appareil client (1) ou générée au moyen de l'appareil client (1),
-- en fonction de l'information de déclenchement, un message de déclenchement (101) est transmis par l'appareil client (1) au système serveur (30),
-- un premier flux de travail est exécuté au moyen du système serveur (30) et en fonction du message de déclenchement (101) reçu,
le système étant configuré de telle sorte que, pendant et/ou après l'exécution du premier flux de travail, au moins une information d'affichage (102), concernant en particulier le premier flux de travail, soit transmise par le système serveur (30) à l'appareil client (1),
le système étant configuré de telle sorte que ladite au moins une information d'affichage (102) soit affichée au moyen du papier électronique (10) du dispositif d'affichage (10') de l'appareil client (1),
le système étant configuré de telle sorte que, lors d'une étape de configuration précédant la première étape, le système serveur transmette au moins une information de configuration (110) à l'appareil client, **caractérisé en ce que**
ladite au moins une information de configuration (110) comprend une ou plusieurs des informations qui suivent :
-- au moins une information pour la configuration de l'appareil client (1) de telle sorte que l'appareil client (1) soit configuré pour la reconnaissance et/ou la saisie et/ou la génération de l'information de déclenchement,
-- au moins une information pour la configuration de l'appareil client (1) de telle sorte que l'appareil client (1) soit configuré pour générer le message de déclenchement (101) en fonction de l'information de déclenchement,
l'appareil client (1) comprenant un dispositif capteur (8) ou étant en communication avec un dispositif capteur (8), le système étant configuré de telle sorte que les information de déclenchement soient générées dans une première étape en fonction d'une mesure du dispositif capteur (8),
le système étant configuré de telle sorte que les valeurs mesurées qui ont été déterminées au moyen du dispositif capteur (8) soient transmises au système serveur (30) au moyen du message de déclenchement (101), une évaluation des valeurs mesurées étant effectuée au moyen du système serveur (30) ou d'un dispositif externe (40), un résultat de l'évaluation étant transmis à l'appareil client (1) sous forme d'information d'affichage (102) et communiqué à un utilisateur via le dispositif d'affichage (10').

13. Programme informatique comprenant des instructions qui, lors de l'exécution du programme informatique par un système selon la revendication 12, amènent le système à mettre en œuvre un procédé selon l'une des revendications 1 à 11.
